(19) Europäisches Patentamt
European Patent Office
Office européen des brevets

(11) **EP 4 188 972 B1**

(12) **EUROPÄISCHE PATENTSCHRIFT**

(45) Veröffentlichungstag und Bekanntmachung des Hinweises auf die Patenterteilung:
**25.09.2024   Patentblatt 2024/39**

(21) Anmeldenummer: **21754944.3**

(22) Anmeldetag: **27.07.2021**

(51) Internationale Patentklassifikation (IPC):
**C08G 18/08** (2006.01)    **B29C 64/135** (2017.01)
**B33Y 70/00** (2020.01)    **C08G 18/42** (2006.01)
**C08G 18/76** (2006.01)    **C08K 3/36** (2006.01)

(52) Gemeinsame Patentklassifikation (CPC):
(C-Sets verfügbar)
**C08G 18/7671; B33Y 70/00; C08G 18/0895;**
**C08G 18/4238; C08K 3/36; C08K 5/20; C08K 9/06;**
B29C 64/153; B33Y 10/00; C08K 2201/005;
C08K 2201/014                                    (Forts.)

(86) Internationale Anmeldenummer:
**PCT/EP2021/071052**

(87) Internationale Veröffentlichungsnummer:
**WO 2022/028963 (10.02.2022 Gazette 2022/06)**

(54) **SINTERPULVER ENTHALTEND EIN THERMOPLASTISCHES POLYURETHAN, EIN FLIESSMITTEL UND EIN ORGANISCHES ADDITIV**

SINTER POWDER COMPRISING A THERMOPLASTIC POLYURETHANE, A FLOW AGENT AND AN ORGANIC ADDITIVE

POUDRE DE FRITTAGE CONTENANT UN POLYURÉTHANE THERMOPLASTIQUE, UN SOLVANT ET UN ADDITIF ORGANIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.08.2020   EP 20189239**

(43) Veröffentlichungstag der Anmeldung:
**07.06.2023   Patentblatt 2023/23**

(73) Patentinhaber: **BASF SE**
**67056 Ludwigshafen am Rhein (DE)**

(72) Erfinder:
• **VERBELEN, Leander**
**69115 Heidelberg (DE)**
• **HOLLMANN, Rajan**
**49448 Lemfoerde (DE)**
• **ROCHETTE, Jean**
**38290 Frontonas (FR)**
• **SCHAEFER, Frank**
**49448 Lemfoerde (DE)**
• **FISCHER, Viktor**
**69115 Heidelberg (DE)**
• **METZGER, Andre**
**69115 Heidelberg (DE)**
• **KURT, Sinan**
**69115 Heidelberg (DE)**

(74) Vertreter: **Ellwanger, Arndt**
**Ellwanger & Baier**
**Patentanwälte Partnerschaftsgesellschaft**
**Friedrichsplatz 9**
**68165 Mannheim (DE)**

(56) Entgegenhaltungen:
**EP-B1- 3 157 737    DE-A1- 102017 124 047**

(52) Gemeinsame Patentklassifikation (CPC): (Forts.)

C-Sets
**C08K 3/36, C08L 75/04;**
**C08K 5/20, C08L 75/04;**
**C08K 9/06, C08L 75/04**

**Beschreibung**

Die vorliegende Erfindung betrifft ein Sinterpulver (SP), das 59,5 bis 99,85 Gew.-% mindestens eines thermoplastischen Polyurethans (A), 0,05 bis 0,5 Gew.-% mindestens eines Fließmittels (B), 0,1 bis 5 Gew.-% mindestens eines organischen Additivs (C), 0 bis 5 Gew.-% mindestens eines weiteren Additivs (D) und 0 bis 30 Gew.-% mindestens eines Verstärkungsmittels (E), jeweils bezogen auf die Summe der Gewichtsprozente (A), (B) (C), (D) und (E), enthält, wobei das mindestens eine organische Additiv (C) ausgewählt ist aus der Gruppe bestehend aus mit Maleinsäure und/oder Maleinsäureanhydrid gegrafteten Polypropylen-Wachsen und Amid-Wachsen. Darüber hinaus betrifft die vorliegende Erfindung ein Verfahren zur Herstellung eines Formkörpers durch Sintern des Sinterpulvers (SP), einen Formkörper, der durch das erfindungsgemäße Verfahren erhältlich ist, sowie die Verwendung mindestens eines Fließmittels (B) und mindestens eines organischen Additivs (C) in einem Sinterpulver (SP) zur Verbesserung der Rieselfähigkeit und Koaleszenz des Sinterpulvers (SP). Des Weiteren betrifft die vorliegende Erfindung die Verwendung des Sinterpulvers (SP) in einem Sinterverfahren sowie ein Verfahren zur Herstellung des Sinterpulvers (SP).

Die schnelle Bereitstellung von Prototypen ist eine in der jüngsten Zeit häufig gestellte Aufgabe. Ein Verfahren, das für dieses sogenannte "rapid prototyping" besonders geeignet ist, ist das selektive Lasersintern (SLS). Dabei wird ein Kunststoffpulver in einer Kammer selektiv mit einem Laserstrahl belichtet. Das Pulver schmilzt auf, die geschmolzenen Partikel laufen ineinander und erstarren wieder. Wiederholtes Aufbringen von Kunststoffpulver und anschließendes Belichten mit einem Laser ermöglicht die Modellierung von dreidimensionalen Formkörpern.

Das Verfahren des selektiven Lasersinterns zur Herstellung von Formkörpern aus pulverförmigen Polymeren wird ausführlich in den Patentschriften US 6,136,948 und WO 96/06881 beschrieben.

Eine Weiterentwicklung des selektiven Lasersinterns ist das in der EP 1 648 686 beschriebene High-Speed Sintern (HSS) oder die sogenannte Multijet Fusion Technologie (MJF) von HP. Beim High-Speed Sintern wird durch Aufsprühen einer infrarotabsorbierenden Tinte auf den zu versinternden Bauteilquerschnitt und anschließendes Belichten mit einem Infrarotstrahler eine höhere Verarbeitungsgeschwindigkeit, verglichen mit dem selektiven Lasersintern, erzielt.

Eine weitere Variante des Sinterns ist das selektive Heißsinterverfahren (SHS; selective heat sintering), das die Druckeinheit eines konventionellen Thermodruckers nutzt um das Kunststoffpulver selektiv aufzuschmelzen.

Von besonderer Bedeutung bei den oben genannten Sinterverfahren ist die Rieselfähigkeit des Kunststoffpulvers. Diese sollte möglichst hoch sein, damit sich das Kunststoffpulver gut verarbeiten lässt. Eine hohe Rieselfähigkeit ermöglicht nämlich zum einen die fehlerfreie Ausbildung der Pulverschichten und zum anderen verbessert sie das Sinterverhalten des Kunststoffpulvers, wodurch ein Formkörper mit einer hohen Qualität, das heißt, einer guten Oberflächenbeschaffenheit und einer hohen Bauteildichte, erhalten wird.

Im Gegensatz dazu lassen sich Kunststoffpulver mit einer geringen Rieselfähigkeit in Sinterverfahren schlecht verarbeiten und damit hergestellte Formkörper zeigen oftmals Defekte und weisen außerdem eine geringere Bauteildichte auf, was sich häufig in den mechanischen Eigenschaften widerspiegelt. Zusätzlich kann eine schlechte Rieselfähigkeit zu Problemen bei der Pulverdosierung, und schlimmstenfalls zu einem Abbruch des Druckprozesses, führen. Wie in dem Artikel "An experimental study into the effects of bulk and flow behaviour of laser sintering polymer powders on resulting part properties" von S. Ziegelmeier et al. (Journal of Materials Processing Technology, 2015, 215, 239) beschrieben, weisen insbesondere Kunststoffpulver aus elastischen bzw. weichen Materialien wie beispielsweise thermoplastisches Polyurethan (TPU) eine verringerte Rieselfähigkeit auf.

Um die Rieselfähigkeit zu verbessern, werden daher typischerweise sogenannte Fließmittel, die auch als Rieselhilfen bezeichnet werden, eingesetzt. Bei den Fließmitteln handelt es sich in der Regel um anorganische Additive wie zum Beispiel Silikate, Metalloxide und Mineralien.

Die US 6,110,411 beispielweise beschreibt ein Sinterpulver, das ein Polyether-ester-Elastomer und 0,02 bis 5 Gew.-%, bezogen auf das Gesamtgewicht des Sinterpulvers, eines Fließmittels enthält. Als Fließmittel wird zum Beispiel pyrogenes Siliciumdioxid eingesetzt.

Die US 2004/204531 beschreibt eine Zusammensetzung, die 88 bis 99,99 Gew.-% eines Polymers, ausgewählt aus der Gruppe Polyamide, Derivate von Polyamiden oder Mischungen derselben, und 0,05 bis 0,25 Gew.-% einer Rieselhilfe enthält. Die Rieselhilfe ist ausgewählt aus anorganischen Pigmenten und Kieselsäuren.

Allerdings ist es nachteilig, dass der Einsatz dieser Fließmittel limitiert ist, da wie zum Beispiel in dem Artikel "Laser sintering of polyamides and other polymers" von R.D. Goodridge et al. (Progress in Materials Science, 2012, 57, 229) beschrieben, ein zu hoher Gehalt an Fließmitteln zu verschlechterten mechanischen Eigenschaften der gedruckten Formkörper führt. Das liegt vor allem daran, dass bei hohen Gehalten an anorganischen Additiven das Verschmelzen des Kunststoffpulvers während dem Sinterprozess verhindert wird. Außerdem können die anorganischen Additive als Nukleierungskeime wirken und die Kristallisation beschleunigen, was im Sinterprozess Probleme wie beispielsweise Curling und Verzug verursachen kann.

Neben der Rieselfähigkeit hat auch die Koaleszenz des Kunststoffpulvers beim Aufschmelzvorgang einen großen Einfluss auf die Verarbeitbarkeit und insbesondere die mechanischen Eigenschaften des hergestellten Form-

körpers. Dabei können Kunststoffpulver, beispielsweise elastische Kunststoffpulver wie TPU, die ein schlechtes Koaleszenzverhalten aufweisen sogar trotz hervorragender Rieselfähigkeit eine schlechte Verarbeitbarkeit zeigen, die zu porösen Formkörpern mit schlechten mechanischen Eigenschafften führt. Das Auftreten von Oberflächendefekten und Rissen ist dabei besonders bei der Herstellung von Formkörpern mit einer komplexen Struktur bzw. Geometrie ausgeprägt.

Die EP 3 157 737 B1 offenbart ein thermoplastisches pulverförmiges Mittel enthaltend 0,02 bis 0,5 Gew.-%, bezogen auf die Gesamtmenge an Mittel, Fließmittel und pulverförmiges thermoplastisches Polyurethan zur Herstellung von Gegenständen in pulverbasierten additiven Fertigungsverfahren.

Die DE 10 2017 124047 A1 offenbart eine Zusammensetzung umfassend zumindest ein Polymersystem und zumindest ein Antiagglomerationsmittel. Das Polymersystem kann ein thermoplastisches Polyurethan umfassen. In Beispiel 1 wird als Antiagglomerationsmittel Aerosil R 812 (Evonik) und in Beispiel 2 HDK H20 (Wacker) eingesetzt.

Die der vorliegenden Erfindung zugrunde liegende Aufgabe besteht somit darin, ein Sinterpulver bereit zu stellen, das in einem Verfahren zur Herstellung von Formkörpern durch Sintern die vorgenannten Nachteile der im Stand der Technik beschriebenen Sinterpulver und Verfahren nicht oder nur in geringem Maße aufweist. Das Sinterpulver und das Verfahren sollen möglichst einfach und kostengünstig herstellbar bzw. durchführbar sein.

Gelöst wird diese Aufgabe durch ein Sinterpulver (SP) enthaltend die Komponenten

59,5 bis 99,85 Gew.-%, bezogen auf die Summe der Gewichtsprozente (A), (B) (C), (D) und (E), mindestens eines thermoplastischen Polyurethans (A),

0,05 bis 0,5 Gew.-%, bezogen auf die Summe der Gewichtsprozente (A), (B) (C), (D) und (E), mindestens eines Fließmittels (B),

0,1 bis 5 Gew.-%, bezogen auf die Summe der Gewichtsprozente (A), (B) (C), (D) und (E), mindestens eines organischen Additivs (C),

0 bis 5 Gew.-%, bezogen auf die Summe der Gewichtsprozente (A), (B) (C), (D) und (E), mindestens eines weiteren Additivs (D) und

0 bis 30 Gew.-%, bezogen auf die Summe der Gewichtsprozente (A), (B) (C), (D) und (E), mindestens eines Verstärkungsmittels (E), wobei das mindestens eine organische Additiv (C) ausgewählt ist aus der Gruppe bestehend aus mit Maleinsäure und/oder Maleinsäureanhydrid gegrafteten Polypropylen-Wachsen und Amid-Wachsen.

Es wurde überraschend gefunden, dass durch den gleichzeitigen Einsatz von mindestens einem Fließmittel und mindestens einem organischen Additiv, insbesondere einem organischen Additiv ausgewählt aus der Gruppe bestehend aus Polyethylen-Wachsen, Polypropylen-Wachsen, mit Maleinsäure und/oder Maleinsäureanhydrid gegrafteten Polypropylen-Wachsen, Amid-Wachsen, Fettsäureestern und Glycerin-Fettsäureestern, sowohl die Rieselfähigkeit als auch die Koaleszenz des Sinterpulvers beim Sintervorgang signifikant verbessert werden, ohne dass sich der Einsatz des mindestens einen Fließmittels und des mindestens einen organischen Additivs negativ auf die mechanischen Eigenschaften des hergestellten Formkörpers auswirkt. Die aus dem erfindungsgemäßen Sinterpulver hergestellten Formkörper weisen sowohl eine hohe Zugfestigkeit als auch hohe Bruchdehnung auf.

Außerdem wird durch den Einsatz des mindestens einen Fließmittels und des mindestens einen organischen Additivs auch die Herstellung des Sinterpulvers an sich optimiert. Durch die verbesserte Rieselfähigkeit werden Zerkleinerungsschritte wie Mahlen und/oder Sieben beschleunigt, da ein Verstopfen des Siebes vermieden wird. Dies führt zu einer verbesserten Wirtschaftlichkeit und Prozessstabilität.

Sinterpulver (SP)

Erfindungsgemäß enthält das Sinterpulver (SP) als Komponente (A) 59,5 bis 99,85 Gew.-% mindestens eines thermoplastischen Polyurethans, als Komponente (B) 0,05 bis 0,5 Gew.-% mindestens eines Fließmittels, als Komponente (C) 0,1 bis 5 Gew.-% mindestens eines organischen Additivs (C), als Komponente (D) 0 bis 5 Gew.-% mindestens eines weiteren Additivs (D) und als Komponente (E) 0 bis 30 Gew.-% mindestens eines Verstärkungsmittels (E), jeweils bezogen auf die Summe der Gewichtsprozente (A), (B), (C), (D) und (E), bevorzugt bezogen auf das Gesamtgewicht des Sinterpulvers (SP).

Die Gewichtsprozente der Komponenten (A), (B), (C), (D) und (E) addieren sich üblicherweise zu 100 Gew.-%.

Im Rahmen der vorliegenden Erfindung werden die Begriffe "Komponente (A)" und "mindestens ein thermoplastisches Polyurethan" synonym gebraucht und besitzen daher die gleiche Bedeutung.

Entsprechendes gilt für die Begriffe "Komponente (B)" und "mindestens ein Fließmittel". Diese Begriffe werden im Rahmen der vorliegenden Erfindung ebenfalls synonym gebraucht und besitzen daher die gleiche Bedeutung.

Dementsprechend werden auch die Begriffe "Komponente (C)" und "mindestens ein organisches Additiv" synonym gebraucht und besitzen die gleiche Bedeutung.

Auch die Begriffe "Komponente (D)" und "mindestens ein weiteres Additiv" sowie "Komponente (E)" und "mindestens ein Verstärkungsmittel" werden jeweils im Rahmen der vorliegenden Erfindung synonym gebraucht und besitzen daher die gleiche Bedeutung.

Bevorzugt enthält das Sinterpulver (SP) im Bereich von 74,15 bis 99,7 Gew.-% der Komponente (A), im Bereich von 0,1 bis 0,35 Gew.-% der Komponente (B), im Bereich von 0,2 bis 3 Gew.-% der Komponente (C), im Bereich von 0 bis 2,5 Gew.-% der Komponente (D) und im Bereich von 0 bis 20 Gew.-% der Komponente (E), jeweils bezogen auf die Summe der Gewichtsprozente der Komponenten (A), (B), (C), (D) und (E), bevorzugt bezogen auf das Gesamtgewicht des Sinterpulvers (SP).

Am meisten bevorzugt enthält das Sinterpulver (SP) im Bereich von 76,12 bis 99,42 Gew.-% der Komponente (A), im Bereich von 0,18 bis 0,28 Gew.-% der Komponente (B), im Bereich von 0,4 bis 1,1 Gew.-% der Komponente (C), im Bereich von 0 bis 2,5 Gew.-% der Komponente (D) und im Bereich von 0 bis 20 Gew.-% der Komponente (E), jeweils bezogen auf die Summe der Gewichtsprozente der Komponenten (A), (B), (C), (D) und (E), bevorzugt bezogen auf das Gesamtgewicht des Sinterpulvers (SP).

Enthält das Sinterpulver (SP) die Komponente (D), kann es beispielsweise im Bereich von 0,1 bis 5 Gew.-% der Komponente (D), vorzugsweise im Bereich von 0,2 bis 2,5 Gew.-%, der Komponente (D), bezogen auf die Summe der Gewichtsprozente der Komponenten (A), (B), (C), (D) und (E), bevorzugt bezogen auf das Gesamtgewicht des Sinterpulvers (SP), enthalten.

Enthält das Sinterpulver (SP) die Komponente (E), kann es beispielsweise im Bereich von 5 bis 30 Gew.-% der Komponente (E), vorzugsweise im Bereich von 10 bis 20 Gew.-%, der Komponente (E), bezogen auf die Summe der Gewichtsprozente der Komponenten (A), (B), (C), (D) und (E), bevorzugt bezogen auf das Gesamtgewicht des Sinterpulvers (SP), enthalten.

Wenn das Sinterpulver (SP) die Komponente (D) und/oder die Komponente (E) enthält, werden üblicherweise die Gewichtsprozente des im Sinterpulver (SP) enthaltenen mindestens einen thermoplastischen Polyurethans (A) entsprechend reduziert, so dass die Summe der Gewichtsprozente des mindestens einen thermoplastischen Polyurethans (A), der Komponente (B), der Komponente (C) sowie der Komponente (D) und/oder der Komponente (E) 100 Gew.-% ergibt.

Enthält das Sinterpulver (SP) die Komponente (D), so enthält es somit beispielsweise im Bereich von 59,5 bis 99,75 Gew.-% der Komponente (A), im Bereich von 0,05 bis 0,5 Gew.-% der Komponente (B), im Bereich von 0,1 bis 5 Gew.-% der Komponente (C), im Bereich von 0,1 bis 5 Gew.-% der Komponente (D) und im Bereich von 0 bis 30 Gew.-% der Komponente (E), bezogen auf die Summe der Gewichtsprozente der Komponenten (A), (B), (C), (D) und (E), bevorzugt bezogen auf das Gesamtgewicht des Sinterpulvers (SP).

Enthält das Sinterpulver (SP) die Komponente (D), so enthält es somit vorzugsweise im Bereich von 74,15 bis 99,5 Gew.-% der Komponente (A), im Bereich von 0,1 bis 0,35 Gew.-% der Komponente (B), im Bereich von 0,2 bis 3 Gew.-% der Komponente (C), im Bereich von 0,2 bis 2,5 Gew.-% der Komponente (D) und im Bereich von 0 bis 20 Gew.-% der Komponente (E), bezogen auf die Summe der Gewichtsprozente der Komponenten (A), (B), (C), (D) und (E), bevorzugt bezogen auf das Gesamtgewicht des Sinterpulvers (SP).

Enthält das Sinterpulver (SP) die Komponente (D), so enthält es somit mehr bevorzugt im Bereich von 76,12 bis 99,22 Gew.-% der Komponente (A), im Bereich von 0,18 bis 0,28 Gew.-% der Komponente (B), im Bereich von 0,4 bis 1,1 Gew.-% der Komponente (C), im Bereich von 0,2 bis 2,5 Gew.-% der Komponente (D) und im Bereich von 0 bis 20 Gew.-% der Komponente (E), bezogen auf die Summe der Gewichtsprozente der Komponenten (A), (B), (C), (D) und (E), bevorzugt bezogen auf das Gesamtgewicht des Sinterpulvers (SP).

Enthält das Sinterpulver (SP) die Komponente (E), so enthält es somit beispielsweise im Bereich von 59,5 bis 94,85 Gew.-% der Komponente (A), im Bereich von 0,05 bis 0,5 Gew.-% der Komponente (B), im Bereich von 0,1 bis 5 Gew.-% der Komponente (C), im Bereich von 0 bis 5 Gew.-% der Komponente (D) und im Bereich von 5 bis 30 Gew.-% der Komponente (E), bezogen auf die Summe der Gewichtsprozente der Komponenten (A), (B), (C), (D) und (E), bevorzugt bezogen auf das Gesamtgewicht des Sinterpulvers (SP).

Enthält das Sinterpulver (SP) die Komponente (E), so enthält es somit vorzugsweise im Bereich von 74,15 bis 89,7 Gew.-% der Komponente (A), im Bereich von 0,1 bis 0,35 Gew.-% der Komponente (B), im Bereich von 0,2 bis 3 Gew.-% der Komponente (C), im Bereich von 0 bis 2,5 Gew.-% der Komponente (D) und im Bereich von 10 bis 20 Gew.-% der Komponente (E), bezogen auf die Summe der Gewichtsprozente der Komponenten (A), (B), (C), (D) und (E), bevorzugt bezogen auf das Gesamtgewicht des Sinterpulvers (SP).

Enthält das Sinterpulver (SP) die Komponente (E), so enthält es somit mehr bevorzugt im Bereich von 76,12 bis 89,42 Gew.-% der Komponente (A), im Bereich von 0,18 bis 0,28 Gew.-% der Komponente (B), im Bereich von 0,4 bis 1,1 Gew.-% der Komponente (C), im Bereich von 0 bis 2,5 Gew.-% der Komponente (D) und im Bereich von 10 bis 20 Gew.-% der Komponente (E), bezogen auf die Summe der Gewichtsprozente der Komponenten (A), (B), (C), (D)

und (E), bevorzugt bezogen auf das Gesamtgewicht des Sinterpulvers (SP).

Enthält das Sinterpulver (SP) die Komponenten (D) und (E), so enthält es somit beispielsweise im Bereich von 59,5 bis 94,75 Gew.-% der Komponente (A), im Bereich von 0,05 bis 0,5 Gew.-% der Komponente (B), im Bereich von 0,1 bis 5 Gew.-% der Komponente (C), im Bereich von 0,1 bis 5 Gew.-% der Komponente (D) und im Bereich von 5 bis 30 Gew.-% der Komponente (E), bezogen auf die Summe der Gewichtsprozente der Komponenten (A), (B), (C), (D) und (E), bevorzugt bezogen auf das Gesamtgewicht des Sinterpulvers (SP).

Enthält das Sinterpulver (SP) die Komponenten (D) und (E), so enthält es somit vorzugsweise im Bereich von 74,15 bis 89,5 Gew.-% der Komponente (A), im Bereich von 0,1 bis 0,35 Gew.-% der Komponente (B), im Bereich von 0,2 bis 3 Gew.-% der Komponente (C), im Bereich von 0,2 bis 2,5 Gew.-% der Komponente (D) und im Bereich von 10 bis 20 Gew.-% der Komponente (E), bezogen auf die Summe der Gewichtsprozente der Komponenten (A), (B), (C), (D) und (E), bevorzugt bezogen auf das Gesamtgewicht des Sinterpulvers (SP).

Enthält das Sinterpulver (SP) die Komponenten (D) und (E), so enthält es somit mehr bevorzugt im Bereich von 76,12 bis 89,22 Gew.-% der Komponente (A), im Bereich von 0,18 bis 0,28 Gew.-% der Komponente (B), im Bereich von 0,4 bis 1,1 Gew.-% der Komponente (C), im Bereich von 0,2 bis 2,5 Gew.-% der Komponente (D) und im Bereich von 10 bis 20 Gew.-% der Komponente (E), bezogen auf die Summe der Gewichtsprozente der Komponenten (A), (B), (C), (D) und (E), bevorzugt bezogen auf das Gesamtgewicht des Sinterpulvers (SP).

Das Sinterpulver (SP) weist üblicherweise Partikel auf. Diese Partikel haben beispielsweise eine Größe (D50-Wert) im Bereich von 10 bis 190 $\mu$m, bevorzugt im Bereich von 15 bis 150 $\mu$m, mehr bevorzugt im Bereich von 20 bis 110 $\mu$m und besonders bevorzugt im Bereich von 40 bis 100 $\mu$m.

Unter dem "D50-Wert" wird im Rahmen der vorliegenden Erfindung die Partikelgröße verstanden, bei der 50 Vol.-% der Partikel bezogen auf das Gesamtvolumen der Partikel kleiner oder gleich dem D50-Wert sind und 50 Vol.-% der Partikel bezogen auf das Gesamtvolumen der Partikel größer als der D50-Wert sind.

Der D50-Wert wird im Rahmen der vorliegenden Erfindung bestimmt mittels Laserbeugung gemäß ISO 13320 (Horiba LA-960, Retsch Technology, Deutschland) mit trockener Dispergierung bei 1 bar. Die Auswertung erfolgt mit Hilfe der Fraunhofer-Methode.

Das Sinterpulver (SP) weist üblicherweise eine Schmelztemperatur ($T_{M(SP)}$) im Bereich von 80 bis 220 °C auf. Bevorzugt liegt die Schmelztemperatur ($T_{M(SP)}$) des Sinterpulvers (SP) im Bereich von 100 bis 190°C und insbesondere bevorzugt im Bereich von 120 bis 170°C.

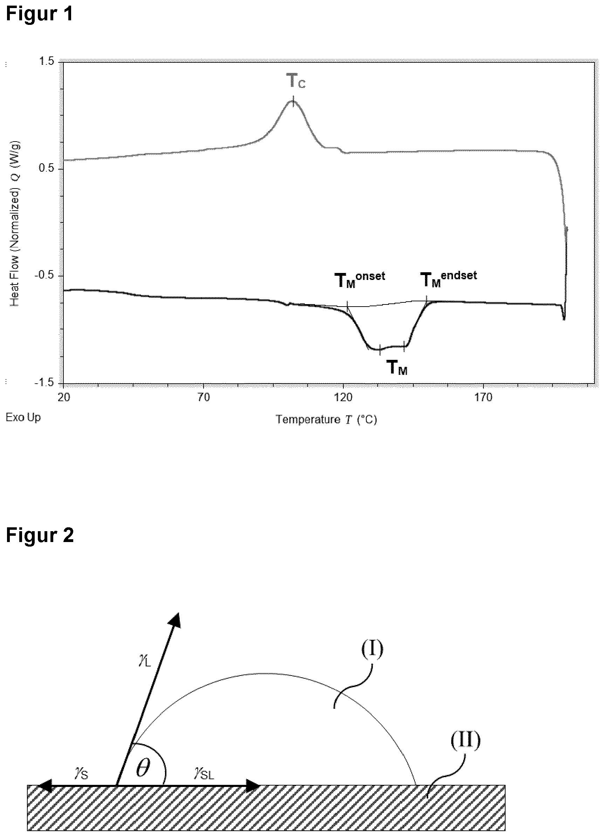

Die Schmelztemperatur ($T_{M(SP)}$) wird im Rahmen der vorliegenden Erfindung gemäß DIN EN ISO 11357 mittels dynamischer Differenzkalorimetrie (DDK; Differential Scanning Calorimetry, DSC; Discovery series DSC, TA Instruments) bestimmt. Die Probe wird während der Messung unter Stickstoffatmosphäre folgendem Temperaturzyklus unterworfen: 5 Minuten bei - 80°C, danach Aufheizen auf mindestens 200°C mit 20°C/min (1. Heizlauf (H1)), dann 5 Minuten bei mindestens 200°C, dann Abkühlen auf - 80°C mit 20°C/min, dann 5 Minuten bei - 80°C, dann Aufheizen auf mindestens 200°C mit 20°C/min (2. Heizlauf (H2)). Dabei wird ein DSC-Diagramm, wie es in Figur 1 beispielhaft gezeigt ist, erhalten. Die Bergriffe "Schmelze-Onset ($T_M^{onset}$)" beziehungsweise "Schmelze-Endset ($T_M^{endset}$)" sind dem Fachmann bekannt. Sie entsprechen dem Anfang (onset) beziehungsweise dem Ende (endset) des Aufschmelzpeaks. Unter der Schmelztemperatur ($T_{M(SP)}$) wird die Temperatur verstanden, bei der der Aufschmelzpeak des ersten Heizlaufs (H1) des DSC-Diagramms ein Maximum aufweist. Falls im Bereich zwischen $T_M^{onset}$ und $T_M^{endset}$ mehrere lokale Maxima auftreten, wird als Schmelztemperatur ($T_{M(SP)}$) der numerische Mittelwert der jeweiligen lokalen Maxima verstanden.

Das Sinterpulver (SP) weist außerdem üblicherweise eine Schmelzvolumenrate (melt volume rate, MVR) im Bereich von 3 bis 150 cm³/10min auf. Bevorzugt liegt die Schmelzvolumenrate des Sinterpulvers (SP) im Bereich von 15 bis 100 cm³/10min, mehr bevorzugt im Bereich von 30 bis 70 cm³/10min.

Die Schmelzvolumenrate wird im Rahmen der vorliegenden Erfindung nach DIN EN ISO 1133 ermittelt (mi2.1, Göttfert, Deutschland). Dazu wird das Sinterpulver (SP) 2 Stunden bei 110°C in Stickstoff vorgetrocknet und anschließend mit einer Belastung von 2,16 kg und bei einer Temperatur = ($T_{m(SP)}$ + 40°C) gemessen.

Das Sinterpulver (SP) weist zudem üblicherweise eine Schüttdichte von $\geq$ 300 g/L, bevorzugt von $\geq$ 350 g/L und mehr bevorzugt von $\geq$ 400 g/L, auf.

Die Schüttdichte wird im Rahmen der vorliegenden Erfindung nach DIN EN ISO 60 bestimmt. Sie kann als Maß für die Rieselfähigkeit des Sinterpulvers (SP) verwendet werden. Es gilt je höher die Schüttdichte, desto höher die Rieselfähigkeit des Sinterpulvers (SP).

Das Sinterpulver (SP) kann nach allen dem Fachmann bekannten Methoden hergestellt werden. Beispielsweise wird das Sinterpulver durch Vermahlen, durch Fällung, durch Schmelzemulgierung oder durch Mikrogranulierung hergestellt.

Wird das Sinterpulver (SP) durch Fällung hergestellt, so wird üblicherweise die Komponente (A) mit einem Lösungsmittel gemischt und gegebenenfalls unter Erwärmen in dem Lösungsmittel unter Erhalt einer Lösung gelöst. Die Fällung des TPU-Pulvers erfolgt anschließend beispielsweise dadurch, dass die Lösung abgekühlt wird, das Lösungsmittel aus der Lösung abdestilliert wird oder ein Fällungsmittel zu der Lösung gegeben wird. Die Komponenten (B), (C) sowie gegebenenfalls (D) und (E) werden üblicherweise dem trockenen TPU-Pulver beigemischt unter Erhalt des Sinterpulvers (SP).

Das Vermahlen kann nach allen dem Fachmann bekannten Methoden durchgeführt werden, beispielsweise werden die Komponenten (A), (B) und (C) sowie gegebenenfalls (D) und (E) in eine Mühle gegeben und darin vermahlen.

Als Mühle eignen sich alle dem Fachmann bekannten Mühlen, beispielsweise Sichtermühlen, Gegenstrahlmühlen, Hammermühlen, Kugelmühlen, Schwingmühlen oder Rotormühlen wie Stiftmühlen und Wirbelstrommühlen. Dabei wird die Korngröße typischerweise durch eine nach der Mühle angeordnete Siebmaschine eingestellt. In einer bevorzugten Ausführungsform wird ein Langmaschensieb eingesetzt. Durch den Einsatz eines Langmaschensiebs kann der Anteil der Gut-Fraktion erhöht werden. Die Maschengröße des Siebs ist so zu wählen, dass der oben genannte D50-Wert des Sinterpulvers (SP) eingestellt werden kann.

Das Mahlen in der Mühle kann ebenfalls nach allen dem Fachmann bekannten Methoden erfolgen. Beispielsweise kann die Mahlung unter Inertgas stattfinden und/oder unter Kühlung mit flüssigem Stickstoff. Die Kühlung mit flüssigem Stickstoff ist bevorzugt. Die Temperatur bei der Mahlung ist beliebig, bevorzugt wird die Mahlung bei Temperaturen von flüssigem Stickstoff durchgeführt, beispielsweise bei einer Temperatur im Bereich von -210 bis -195 °C. Die Temperatur der Komponenten beim Vermahlen liegt dann beispielsweise im Bereich von -60 bis 0°C.

Vorzugsweise liegt mindestens die Komponente (A) vor dem Mahlen in Form eines Granulats vor. Das Granulat kann beispielsweise kugelförmig, zylinderförmig oder ellipsenförmig sein.

Das Verfahren zur Herstellung eines Sinterpulvers (SP) enthaltend

59,5 bis 99,85 Gew.-%, bezogen auf das Gesamtgewicht des Sinterpulvers (SP), mindestens eines thermoplastischen Polyurethans (A),

0,05 bis 0,5 Gew.-%, bezogen auf das Gesamtgewicht des Sinterpulvers (SP), mindestens eines Fließmittels (B),

0,1 bis 5 Gew.-%, bezogen auf das Gesamtgewicht des Sinterpulvers (SP), mindestens eines organischen Additivs (C),

0 bis 5 Gew.-%, bezogen auf das Gesamtgewicht des Sinterpulvers (SP), mindestens eines weiteren Additivs (D) und

0 bis 30 Gew.-%, bezogen auf das Gesamtgewicht des Sinterpulvers (SP), mindestens eines Verstärkungsmittels (E),

wobei das mindestens eine organische Additiv (C) ausgewählt ist aus der Gruppe bestehend aus mit Maleinsäure und/oder Maleinsäureanhydrid gegrafteten Polypropylen-Wachsen und Amid-Wachsen,

umfasst dann in einer Ausführungsform den Schritt

a) Mahlen der Gesamtmenge, bezogen auf das Gesamtgewicht des Sinterpulvers (SP), der Komponente (A),

wobei ein erster Teil (BT1) der Gesamtmenge, bezogen auf das Gesamtgewicht des Sinterpulvers (SP), der Komponente (B) und/oder ein erster Teil (CT1) der Gesamtmenge, bezogen auf das Gesamtgewicht des Sinterpulvers (SP), der Komponente (C) vor Schritt a) der Komponente (A) unter Erhalt eines Pulvers (P) zugemischt werden und dem Pulver (P) nach Schritt a) der restliche Teil (BT2) der Gesamtmenge der Komponente (B) und/oder der restliche Teil (CT2) der Gesamtmenge der Komponente (C) unter Erhalt des Sinterpulvers (SP) zugemischt werden, wobei der erste Teil (BT1) 0 bis 100 Gew.-% der Gesamtmenge, bezogen auf das Gesamtgewicht des Sinterpulvers (SP), der Komponente (B) ausmacht und wobei der erste Teil (CT1) 0 bis 100 Gew.-% der Gesamtmenge, bezogen auf das Gesamtgewicht des Sinterpulvers (SP), der Komponente (C) ausmacht, und wobei der restliche Teil (BT2) (100-BT1) Gew.-% der Gesamtmenge, bezogen auf das Gesamtgewicht des Sinterpulvers (SP), der Komponente (B) und der restliche Teil (CT2) (100-CT1) Gew.-% der Gesamtmenge, bezogen auf das Gesamtgewicht des Sinterpulvers (SP), der Komponente (C) ausmacht,

und wobei gegebenenfalls

die Gesamtmenge, bezogen auf das Gesamtgewicht des Sinterpulvers (SP), der Komponente (D) und/oder

die Gesamtmenge, bezogen auf das Gesamtgewicht des Sinterpulvers (SP), der Komponente (E) vor Schritt a) oder nach Schritt a) zugemischt werden.

Vorzugsweise wird das mindestens eine organische Additiv (C) vor dem Mahlvorgang der Komponente (A) zugefügt. Dadurch kann der Durchsatz während des Mahlvorgangs signifikant erhöht werden.

Verfahren zum Mischen sind dem Fachmann als solche bekannt. Üblicherweise werden die Komponenten (B) und/oder (C) sowie gegebenenfalls die Komponenten (D) und/oder (E) der Komponente (A) trocken zugemischt. Allerdings ist es auch möglich, dass das Mischen über eine Compoundierung in einem Extruder erfolgt, insbesondere bevorzugt in einem Doppelschneckenextruder. Es ist allerdings auch möglich, dass eine Kombination aus teilweise eincompoundieren und teilweise trocken einmischen verwendet wir.

Für das Mahlen in Schritt a) gelten die zuvor beschriebenen Ausführungen und Bevorzugungen im Hinblick auf das Mahlen entsprechend.

In einer bevorzugten Ausführungsform wird das mindestens eine thermoplastische Polyurethan (A) vor Schritt a) getempert.

Vorzugsweise wird das mindestens eine thermoplastische Polyurethan (A) bei einer Temperatur $T_T$ getempert, die höchstens 100°C unterhalb der Schmelztemperatur ($T_{M(A)}$) des mindestens einen thermoplastischen Polyurethans (A) liegt, mehr bevorzugt bei einer Temperatur $T_T$, die höchstens 70°C unterhalb der Schmelztemperatur ($T_{M(A)}$) des mindestens einen thermoplastischen Polyurethans (A) liegt, und besonders bevorzugt bei einer Temperatur $T_T$, die höchstens 40°C unterhalb der Schmelztemperatur ($T_{M(A)}$) des mindestens einen thermoplastischen Polyurethans (A) liegt.

Weiterhin wird das mindestens eine thermoplastische Polyurethan (A) vorzugsweise bei einer Temperatur $T_T$ getempert, die mindestens 5°C unterhalb der Schmelztemperatur ($T_{M(A)}$) des mindestens einen thermoplastischen Polyurethans (A) liegt, mehr bevorzugt bei einer Temperatur $T_T$, die mindestens 10°C unterhalb der Schmelztemperatur ($T_{M(A)}$) des mindestens einen thermoplastischen Polyurethans (A) liegt, und besonders bevorzugt bei einer Temperatur $T_T$, die mindestens 20°C unterhalb der Schmelztemperatur ($T_{M(A)}$) des mindestens einen thermoplastischen Polyurethans (A) liegt.

Das mindestens eine thermoplastische Polyurethan (A) wird vorzugsweise mindestens 10 Stunden getempert, mehr bevorzugt mindestens 24 Stunden und besonders bevorzugt mindestens 48 Stunden. Vorzugsweise wird das mindestens eine thermoplastische Polyurethan (A) 7 Tage getempert. Vorzugsweise erfolgt das Tempern in einem Schaufeltrockner (> 4 t) unter Vakuum oder unter Schutzgas. Als Schutzgas wird beispielsweise Stickstoff eingesetzt.

Ein weiterer Gegenstand der vorliegenden Erfindung ist daher auch das Sinterpulver (SP), erhältlich nach dem erfindungsgemäßen Verfahren.

Komponente (A)

Erfindungsgemäß ist die Komponente (A) mindestens ein thermoplastisches Polyurethan.

"Mindestens ein thermoplastisches Polyurethan" bedeutet im Rahmen der vorliegenden Erfindung sowohl genau ein thermoplastisches Polyurethan (A) als auch eine Mischung aus zwei oder mehreren thermoplastischen Polyurethanen (A). Des Weiteren bedeutet der Begriff "mindestens ein thermoplastisches Polyurethan" im Rahmen der vorliegenden Erfindung eine Mischung aus mindestens einem thermoplastischen Polyurethan und mindestens einem weiteren mit dem mindestens einen thermoplastischen Polyurethan mischbaren Polymer. "Mindestens ein weiteres mit dem thermoplastischen Polyurethan mischbares Polymer" bedeutet im Rahmen der vorliegenden Erfindung sowohl genau ein weiteres mit dem thermoplastischen Polyurethan mischbares Polymer als auch eine Mischung aus zwei oder mehreren mit dem thermoplastischen Polyurethan mischbaren Polymeren.

Das mindestens eine thermoplastische Polyurethan (A) kann nach allen dem Fachmann bekannten Methoden hergestellt werden.

In einer bevorzugten Ausführungsform wird das mindestens eine thermoplastische Polyurethan (A) hergestellt durch Umsetzung der Komponenten

a) mindestens einem Isocyanat,
b) mindestens einer gegenüber Isocyanat reaktiven Verbindung, und
c) gegebenenfalls mindestens einem Kettenverlängerer mit einem zahlenmittleren Molekulargewicht $M_N$ im Bereich von 50 bis 499 g/mol
gegebenenfalls in Gegenwart von
d) mindestens einem Katalysator,
e) mindestens einem Additiv und/oder
f) mindestens einem Verstärkungsmittel.

Das zahlenmittlere Molekulargewicht $M_N$ wird im Rahmen der vorliegenden Erfindung bestimmt mittels Gelpermeationschromatographie.

Die Komponente (A) hat vorzugsweise ein gewichtsmittleres Molekulargewicht $M_W$ von mindestens 100 000 g/mol, mehr bevorzugt von mindestens 400 000 g/mol und besonders bevorzugt von mindestens 600 000 g/mol. Außerdem hat die Komponente (A) vorzugsweise ein gewichtsmittleres Molekulargewicht $M_W$ von höchstens 800 000 g/mol.

Das gewichtsmittlere Molekulargewicht $M_W$ wird im Rahmen der vorliegenden Erfindung bestimmt mittels Gelpermeationschromatographie.

Das mindestens eine thermoplastische Polyurethan weist üblicherweise eine Schmelztemperatur ($T_{M(A)}$) im Bereich von 80 bis 220 °C auf. Bevorzugt liegt die Schmelztemperatur ($T_{M(A)}$) des mindestens einen thermoplastischen Polyurethans im Bereich von 100 bis 190°C, mehr bevorzugt im Bereich von 120 bis 170°C und besonders bevorzugt im Bereich von 135 bis 145°C.

Die Schmelztemperatur ($T_{M(A)}$) wird im Rahmen der vorliegenden Erfindung gemäß DIN EN ISO 11357 mittels dynamischer Differenzkalorimetrie (DDK; Differential Scanning Calorimetry, DSC; Discovery series DSC, TA Instruments) bestimmt. Die Probe wird während der Messung unter Stickstoffatmosphäre folgendem Temperaturzyklus unterworfen: 5 Minuten bei - 80°C, danach Aufheizen auf mindestens 200°C mit 20°C/min (1. Heizlauf (H1)), dann 5 Minuten bei mindestens 200°C, dann Abkühlen auf - 80°C mit 20°C/min, dann 5 Minuten bei - 80°C, dann Aufheizen auf mindestens 200°C mit 20°C/min (2. Heizlauf (H2)). Dabei wird ein DSC-Diagramm, wie es in Figur 1 beispielhaft gezeigt ist, erhalten. Die Bergriffe "Schmelze-Onset ($T_M^{onset}$)" beziehungsweise "Schmelze-Endset ($T_M^{endset}$)" sind dem Fachmann bekannt. Sie entsprechen dem Anfang (onset) beziehungsweise dem Ende (endset) des Aufschmelzpeaks. Unter der Schmelztemperatur ($T_{M(SP)}$) wird die Temperatur verstanden, bei der der Aufschmelzpeak des ersten Heizlaufs (H1) des DSC-Diagramms ein Maximum aufweist. Falls im Bereich zwischen $T_M^{onset}$ und $T_M^{endset}$ mehrere lokale Maxima auftreten, wird als Schmelztemperatur ($T_{M(SP)}$) der numerische Mittelwert der jeweiligen lokalen Maxima verstanden.

Komponente (a))

Die Komponente (a)) ist mindestens ein Isocyanat.

"Mindestens ein Isocyanat" bedeutet im Rahmen der vorliegenden Erfindung sowohl genau ein Isocyanat als auch eine Mischung aus zwei oder mehreren Isocyanaten.

Bei dem mindestens einen Isocyanat kann es sich um ein aliphatisches, cycloaliphatisches, araliphatisches und/oder um ein aromatisches Isocyanat handeln.

Vorzugsweise ist die Komponente (a)) ein Diisocyanat, beispielsweise ausgewählt aus der Gruppe bestehend aus Trimethylendiisocyanat, Tetramethylendiisocyanat, Pentamethylendiisocyanat, 1,6-Hexamethylendiisocyanat (HDI), Heptamethylendiisocyanat, Oktamethylendiisocyanat, 2-Methyl-pentamethylen-diisocyanat-1,5, 2-Ethyl-butylen-diisocyanat-1,4, Pentamethylen-diisocyanat-1,5, Butylen-diisocyanat-1,4, 1-Iso-cyanato-3,3,5-trimethyl-5-isocyanatomethyl-cyclohexan (Isophorondiisocyanat, IPDI), 1,4- Bis(isocyanatomethyl)cyclohexan (1,4-HXDI), 1,3-Bis(isocyanatomethyl)cyclohexan (1,3-HXDI), 2,4-Paraphenylen-diisocyanat (PPDI), 2,4-Tetramethylenxylendiisocyanat (TMXDI), 4,4'-, 2,4'- und 2,2'-Dicyclohexylmethandiisocyanat (H12 MDI), 1,4-Cyclohexan-diisocyanat, 1-Methyl-2,4- und 1-Methyl-2,6-cyclohexan-diisocyanat, 2,2'-Diphenylmethandiisocyanat (2,2'-MDI), 2,4'-Diphenylmethandiisocyanat (2,4'-MDI) und 4,4'-Diphenylmethandiisocyanat (4,4'-MDI), 1,5-Naphthylendiisocyanat (NDI), 2,4-Toluylendiisocyanat (2,4-TDI) und 2,6-Toluylendiisocyanat (2,6-TDI), Diphenylmethandiisocyanat, 3,3'-Dimethyl-diphenyldiisocyanat, 1,2-Diphenylethandiisocyanat und Phenylendiisocyanat.

Besonders bevorzugt ist die Komponente (a)) 4,4'-Diphenylmethandiisocyanat (4,4'-MDI).

Komponente (b))

Die Komponente (b)) ist mindestens eine gegenüber Isocyanat reaktive Verbindung.

"Mindestens eine gegenüber Isocyanat reaktive Verbindung" bedeutet im Rahmen der vorliegenden Erfindung sowohl genau eine gegenüber Isocyanat reaktive Verbindung als auch eine Mischung aus zwei oder mehreren gegenüber Isocyanat reaktiven Verbindungen.

Vorzugsweise weist die Komponente (b)) ein zahlenmittleres Molekulargewicht $M_N$ im Bereich von 500 bis 100 000 g/mol, mehr bevorzugt im Bereich von 500 bis 8 000 g/mol, besonders bevorzugt im Bereich von 700 bis 6 000 g/mol und insbesondere im Bereich von 800 bis 4 000 g/mol, auf.

Die mindestens eine gegenüber Isocyanat reaktive Verbindung (b)) besitzt vorzugsweise im statistischen Mittel mindestens 1,8 und höchstens 3,0 Zerewitinoffaktive Wasserstoffatome.

Unter der Anzahl der Zerewitinoff-aktiven Wasserstoffatome wird im Rahmen der vorliegenden Erfindung die Funktionalität der mindestens einen gegenüber Isocyanat reaktiven Verbindung (b)) verstanden. Sie gibt die aus einer Stoffmenge theoretisch auf ein Molekül heruntergerechnete Menge der mindestens einen gegenüber Isocyanat reaktiven Gruppen des Moleküls an.

In einer bevorzugten Ausführungsform liegt die Funktionalität im Bereich von 1,8 bis 2,6 und bevorzugt im Bereich von 1,9 bis 2,2. Insbesondere ist die Funktionalität 2.

Die mindestens eine gegenüber Isocyanat reaktive Verbindung ist vorzugsweise linear.

Sie wird vorzugsweise mit einem Stoffmengenanteil von 1 Äquivalent-Mol% bis 80 Äquivalent-Mol%, bezogen auf den Isocyanatgruppengehalt des mindestens einen Isocyanats, eingesetzt.

Bevorzugt besitzt die mindestens eine gegenüber Isocyanat reaktive Verbindung (Komponente (b))) eine reaktive Gruppe ausgewählt aus der Gruppe bestehend aus Hydroxylgruppe, Aminogruppe, Mercaptogruppe und Carbonsäuregruppe, mehr bevorzugt besitzt die mindestens eine gegenüber Isocyanat reaktive Verbindung (Komponente (b))) eine Hydroxylgruppe.

In einer im Rahmen der vorliegenden Erfindung bevorzugten Ausführungsform ist die mindestens eine gegenüber Isocyanat reaktive Verbindung (Komponente (b))) ausgewählt aus der Gruppe bestehend aus Polyesterdiolen, Polyetherdiolen und Polycarbonatdiolen. Bevorzugt ist die mindestens eine gegenüber Isocyanat reaktive Verbindung (Komponente (b))) ein Polyesterdiol wie Polycaprolacton und/oder ein Polyetherdiol, beispielsweise auf der Basis von Ethylenoxid, Propylenoxid und/oder Butylenoxid. Ein besonder bevorzugter Polyether ist Polytetrahydrofuran (PTHF).

Besonders bevorzugt werden als gegenüber Isocyanat reaktive Verbindungen (Komponente (b))) Verbindungen aus der Gruppe bestehend aus Copolyestern basierend auf Adipinsäure, Bernsteinsäure, Pentandisäure und/oder Sebazinsäure und Gemischen aus 1,2-Ethandiol und 1,4-Butandiol, Copolyestern basierend auf Adipinsäure, Bernsteinsäure, Pentandisäure und/oder Sebazinsäure und Gemischen aus 1,4-Butandiol und 1,6-Hexandiol, und Polyester basierend auf Adipinsäure, Bernsteinsäure, Pentandisäure und/oder Sebazinsäure und 3-Methyl-Pentandiol-1,5 und/oder Polytetramethylenglykol (Polytetrahydrofuran, PTHF), ausgewählt, vorzugsweise Copolyester basierend auf Adipinsäure und Gemischen aus 1,2-Ethandiol und 1,4-Butandiol und Polyester auf der Basis von Adipinsäure, Bernsteinsäure, Pentandisäure und/oder Sebazinsäure und Polytetramethylenglykol (PTHF).

Komponente (c))

Die Komponente (c)) ist mindestens ein Kettenverlängerer mit einem zahlenmittleren Molekulargewicht $M_N$ im Bereich von 50 bis 499 g/mol.

"Mindestens ein Kettenverlängerer mit einem zahlenmittleren Molekulargewicht $M_N$ im Bereich von 50 bis 499 g/mol" bedeutet im Rahmen der vorliegenden Erfindung sowohl genau ein Kettenverlängerer mit einem zahlenmittleren Molekulargewicht $M_N$ im Bereich von 50 bis 499 g/mol als auch eine Mischung aus zwei oder mehreren Kettenverlängerern mit einem zahlenmittleren Molekulargewicht $M_N$ im Bereich von 50 bis 499 g/mol.

Als Komponente (c)) können aliphatische, araliphatische, aromatische und/oder cycloaliphatische Verbindungen mit einem zahlenmittleren Molekulargewicht von 50 g/mol bis 499 g/mol eingesetzt werden.

Vorzugsweise weist die Komponente (c)) zwei gegenüber Isocyanat reaktive Gruppen auf.

Bevorzugte Kettenverlängerer sind daher Diamine und/oder Alkandiole, mehr bevorzugte Kettenverlängerer sind Alkandiole mit 2 bis 10 Kohlenstoff-Atomen, besonders bevorzugte Kettenverlängerer sind Alkandiole mit 3 bis 8 Kohlenstoff-Atomen, im Alkylenrest. Weiterhin ist es bevorzugt, dass die Alkandiole nur primäre Hydroxylgruppen aufweisen.

In einer bevorzugten Ausführungsform ist die Komponente (c)) ausgewählt aus der Gruppe bestehend aus Di-, Tri-, Tetra-, Penta-, Hexa-, Hepta-, Okta-, Nona- und Dekaalkylen-glykolen, 1,4-Cyclohexandiol, 1,4-Dimethanolcyclohexan, Neopentylglykol und Hydrochinon Bis (beta-hydroxyethyl) Ether (HQEE).

Geeignete Di-, Tri-, Tetra-, Penta-, Hexa-, Hepta-, Okta-, Nona- und Deka-alkylenglykole sind beispielsweise 1,2-Ethylenglycol, 1,2-Propandiol, 1,3-Propandiol, 1,4-Butandiol, 2,3-Butandiol, 1,5-Pentandiol, 1,6-Hexandiol, Diethylenglykol, Oligo- und Polypropylenglykole.

Im Rahmen der vorliegenden Erfindung werden vorzugsweise 1,2-Ethylenglycol, 1,3-Propandiol, 1,4-Butandiol und 1,6-Hexandiol, mehr bevorzugt 1,2-Ethylenglycol, 1,4-Butandiol und 1,6-Hexandiol, als Kettenverlängerer (Komponente (c))) eingesetzt.

Bei der Herstellung von weicheren thermoplastischen Polyurethanen liegt das Mol-Verhältnis der Komponente (b)) (mindestens einer gegenüber Isocyanat reaktiven Verbindung) zu der Komponente (c)) (mindestens ein Kettenverlängerer mit einem zahlenmittleren Molekulargewicht $M_N$ im Bereich von 50 bis 499 g/mol) vorzugsweise im Bereich von 1:1 bis 1:5, mehr bevorzugt im Bereich 1:1,5 bis 1:4,5.

Werden die Komponenten (b)) und (c)) in diesem Fall gemischt ist das Hydroxyläquivalentgewicht vorzugsweise > 200, mehr bevorzugt liegt das Hydroxyläquivalentgewicht im Bereich von 230 bis 450.

Bei der Herstellung von härteren thermoplastischen Polyurethanen, beispielsweise von thermoplastischen Polyurethanen mit einer Shore A-Härte von > 98, vorzugsweise von thermoplastischen Polyurethanen mit einer Shore D-Härte im Bereich von 55 bis 75, liegt das Mol-Verhältnis der Komponente (b)) (mindestens einer gegenüber Isocyanat reaktiven Verbindung) zu der Komponente (c)) (mindestens ein Kettenverlängerer mit einem zahlenmittleren Molekulargewicht $M_N$ im Bereich von 50 bis 499 g/mol) vorzugsweise im Bereich von 1:5,5 bis 1:15, mehr bevorzugt im Bereich 1:6 bis 1:12.

Werden die Komponenten (b)) und (c)) in diesem Fall gemischt, liegt das Hydroxyläquivalentgewicht vorzugsweise im Bereich von 110 bis 200, mehr bevorzugt im Bereich von 120 bis 180.

Das Äquivalenz-Verhältnis der NCO-Gruppen der Komponente (a)) (mindestens ein Isocyanat) zur Summe der OH-Gruppen der Komponenten (b)) und (c)) liegt vorzugsweise im Bereich von 0,95:1 bis 1,10:1, mehr bevorzugt im Bereich von 0,98:1 bis 1,08:1 und besonders bevorzugt im Bereich von 1:1 bis 1,05:1.

Komponente (d))

Die Komponente (d)) ist mindestens ein Katalysator.

"Mindestens ein Katalysator (d))" bedeutet im Rahmen der vorliegenden Erfindung sowohl genau ein Katalysator (d)) als auch eine Mischung aus zwei oder mehreren Katalysatoren (d)).

Katalysatoren als solche sind dem Fachmann bekannt. Im Rahmen der vorliegenden Erfindung werden vorzugsweise Katalysatoren eingesetzt, die die Reaktion zwischen den NCO-Gruppen der Isocyanate (Komponente (a))) und den Hydroxylgruppen der gegenüber Isocyanaten reaktiven Verbindung (Komponente (b))) und, sofern eingesetzt, dem Kettenverlängerer (Komponente (c))) beschleunigen.

Geeignete Katalysatoren sind beispielsweise tertiäre Amine, insbesondere Triethylamin, Dimethylcyclohexylamin, N-Methylmorpholin, N,N'-Dimethylpiperazin, 2-(Dimethylaminoethoxy)-ethanol und Diazabicyclo-(2,2,2)-octan.

Im Rahmen der vorliegenden Erfindung werden vorzugsweise organische Metallverbindungen eingesetzt, beispielsweise Titansäureester, Eisenverbindungen, Zinnverbindungen und Wismutsalze.

Eine geeignete Eisenverbindung ist beispielsweise Eisen-(III)-acetylacetonat. Geeignete Zinnverbindungen sind beispielsweise Zinndialkylsalze, Zinndiacetat, Zinndioctoat und Zinndilaurat, bevorzugte Zinnverbindungen sind Dibutylzinndiacetat und Dibutylzinndilaurat. Ein geeignetes Wismutsalz ist beispielsweise Wismutdecanoat.

Im Rahmen der vorliegenden Erfindung besonders bevorzugte Katalysatoren sind Titansäureester, Zinndioctoat und Wismutdecanoat.

Wird ein Katalysator (d)) eingesetzt, wird er bevorzugt in Mengen von 0,0001 bis 0,1 Gew.-Teilen pro 100 Gew.-Teile der gegenüber Isocyanaten reaktiven Verbindung (Komponente (b))) eingesetzt.

Komponente (e))

Die Komponente (e)) ist mindestens ein Additiv.

"Mindestens ein Additiv (e))" bedeutet im Rahmen der vorliegenden Erfindung sowohl genau ein Additiv (e)) als auch eine Mischung aus zwei oder mehreren Additiven (e)).

Das mindestens eine Additiv (e)) kann sowohl das gleiche wie das weiter unten beschriebene mindestens eine weitere Additiv (D) sein, es kann aber auch verschieden von dem weiter unten beschriebenen mindestens einen weiteren Additiv (D) sein. Vorzugsweise ist es von dem weiter unten beschriebenen mindestens einen weiteren Additiv (D) verschieden.

Allerdings unterscheiden sich das mindestens eine Additiv (e)) und das mindestens eine weitere Additiv (D) in der Art ihrer Zugabe. Während das mindestens eine Additiv (e)) vorzugsweise während der Synthese der Komponente (A) der Reaktionsmischung zugegeben wird und somit in das TPU einpolymerisiert wird oder direkt nach der Synthese der Komponente (A) der Komponente (A) zugegeben wird, wird das mindestens eine weitere Additiv (D) erst direkt vor, während oder nach der Herstellung des Sinterpulvers (SP) der Komponente (A) zugegeben.

Bevorzugt ist das mindestens eine Additiv (e)) ausgewählt aus der Gruppe bestehend aus oberflächenaktiven Substanzen, Flammschutzmitteln, Keimbildungsmitteln, Oxidationsstabilisatoren, Gleit- und Entformungshilfen, Farbstoffen und Pigmenten, Stabilisatoren gegen Hydrolyse, Licht, Hitze oder Verfärbung und Weichmachern.

Beispiele für geeignete Stabilisatoren sind beispielsweise primäre und sekundäre Antioxidantien, sterisch gehinderte Phenole, Hindered Amine Light Stabilizers (HALS), UV-Absorber, Hydrolyseschutzmittel, Quencher und Flammschutzmittel. Beispiele für kommerzielle Stabilisatoren sind gegeben in Plastics Additives Handbook, 5th Edition, H. Zweifel, ed., Hanser Publishers, München, 2001 ([1]), S.98-S136.

Geeignete UV-Absorber weisen vorzugsweise ein zahlenmittleres Molekulargewicht $M_N$ von mindestens 300 g/mol, mehr bevorzugt von mindestens 390 g/mol, auf. Ferner weisen geeignete UV-Absorber vorzugsweise ein zahlenmittleres Molekulargewicht $M_N$ von höchstens 5 000 g/mol, mehr bevorzugt von höchstens 2 000 g/mol, auf.

Besonders geeignet als UV-Absorber sind UV-Absorber ausgewählt aus der Gruppe bestehend aus Cinnamate, Oxanilide und Benzotriazole, besonders bevorzugt sind Benzotriazole. Beispiele für besonders geeignete Benzotriazole sind Tinuvin® 213, Tinuvin® 234, Tinuvin® 312, Tinuvin® 571, sowie Tinuvin® 384 und das Eversorb® 82.

Üblicherweise werden die UV-Absorber in Mengen von 0.01 bis 5 Gew.-%, bezogen auf die Masse der Komponente (a)), (b)) und (e)), zudosiert, bevorzugt in Mengen von 0,1 bis 2,0 Gew.-%, insbesondere in Mengen von 0,2 bis 0,5 Gew.-%.

Geeignete Hindered Amine Light Stabilizers weisen vorzugsweise ein zahlenmittleres Molekulargewicht $M_N$ von mindestens 500 g/mol auf. Ferner weisen geeignete Hindered Amine Light Stabilizers vorzugsweise ein zahlenmittleres Molekulargewicht $M_N$ von höchstens 10 000 g/mol, mehr bevorzugt von höchstens 5 000 g/mol, auf.

Besonders bevorzugte Hindered Amine Light Stabilizers (HALS) sind bis-(1,2,2,6,6-penta-methylpiperidyl) sebacat (Tinuvin® 765, Ciba Spezialitätenchemie AG) und das Kondensationsprodukt aus 1-Hydroxyethyl-2,2,6,6-tetramethyl-4-hydroxypiperidin und Bernsteinsäure (Tinuvin® 622). Insbesondere bevorzugt ist das Kondensationsprodukt aus 1-Hydroxyethyl-2,2,6,6-tetramethyl-4-hydroxypiperidine and Bernsteinsäure (Tinuvin® 622), wenn der Titangehalt des fertigen Produktes kleiner als 150 ppm, bevorzugt kleiner als 50 ppm, insbesondere kleiner als 10 ppm, bezogen auf die Komponenten (a)) und (b)), ist.

Üblicherweise werden die HALS in Mengen von 0.01 bis 5 Gew.-%, bezogen auf die Masse der Komponente (a)), (b)) und (e)), zudosiert, bevorzugt in Mengen von 0,1 bis 1,0 Gew.-%, insbesondere in Mengen von 0,15 bis 0,3 Gew.-%.

Eine besonders bevorzugte Stabilisierung enthält eine Mischung aus einem phenolischen Stabilisator, einem Benzotriazol und einer HALS-Verbindung in den oben beschriebenen bevorzugten Mengen.

Komponente (f))

Die Komponente (f)) ist mindestens ein Verstärkungsmittel.

"Mindestens ein Verstärkungsmittel (f))" bedeutet im Rahmen der vorliegenden Erfindung sowohl genau ein Verstärkungsmittel (f)) als auch eine Mischung aus zwei oder mehreren Verstärkungsmitteln (f)).

Das mindestens eine Verstärkungsmittel (f)) kann sowohl das gleiche wie das weiter unten beschriebene mindestens eine Verstärkungsmittel (E) sein, es kann aber auch verschieden von dem weiter unten beschriebenen mindestens einen Verstärkungsmittel (E) sein.

Beispielsweise ist das mindestens eine Verstärkungsmittel (f)) ausgewählt ist aus der Gruppe bestehend aus Carbonnanotubes, Kohlenstofffasern, Borfasern, Glasfasern, Glaskugeln, Kieselsäurefasern, Keramikfasern, Basaltfasern, Aluminiumsilikaten, Aramidfasern und Polyesterfasern.

Das mindestens eine Verstärkungsmittel (f)) kann der Reaktionsmischung bei der Herstellung der Komponente (A) zugegeben werden, wobei es trocken oder als Masterbatch zugegeben werden kann.

Es ist allerdings auch möglich, dass bei der Herstellung der Komponente (A) der Reaktionsmischung kein Verstärkungsmittel (f)) zugegeben wird. In diesem Fall ist es möglich, dass bei der Herstellung des Sinterpulvers (SP) den Komponenten (A), (B), (C) und gegebenenfalls (D) mindestens ein Verstärkungsmittel (E), das weiter unten beschrieben wird, zugegeben wird.

Es ist selbstverständlich auch möglich, dass bei der Herstellung der Komponente (A) der Reaktionsmischung mindestens ein Verstärkungsmittel (f)) zugegeben wird und dann bei der Herstellung des Sinterpulvers (SP) den Komponenten (A), (B), (C) und gegebenenfalls (D) mindestens ein Verstärkungsmittel (E) zugegeben wird.

*Herstellung der Komponente (A)*

Die Herstellung des mindestens einen thermoplastischen Polymers (A) kann in einem diskontinuierlichen Verfahren oder einem kontinuierlichen Verfahren erfolgen. Beispielsweise erfolgt die Herstellung des mindestens einen thermoplastischen Polymers (A) mit Reaktionsextrudern oder dem Bandverfahren nach dem "one-shot"- oder dem Prepolymer-Verfahren, bevorzugt nach dem "one-shot"-Verfahren.

Bei dem "one-shot"-Verfahren werden die Komponenten (a)) und (b)) sowie gegebenenfalls auch die Komponenten (c)), (d)) und/oder (e)) nacheinander oder gleichzeitig miteinander vermischt, wobei die Polymerisationsreaktion unmittelbar einsetzt.

Beim Extruderverfahren werden die Komponenten (a)) und (b)) sowie gegebenenfalls auch die Komponenten (c)), (d)) und/oder (e)) einzeln oder als Gemisch in den Extruder eingeführt und, bevorzugt bei Temperaturen von 100 bis 280°C, mehr bevorzugt bei Temperaturen von 140 bis 250°C, zur Reaktion gebracht. Das erhaltene Polyurethan wird extrudiert, abgekühlt und granuliert. Bevorzugt liegt es als Granulat oder Pulver vor.

Bevorzugt wird ein Zweiwellenextruder verwendet, da der Zweiwellenextruder zwangsfördernd arbeitet und so eine präzisere Einstellung der Temperatur und Ausstoßmenge auf dem Extruder möglich ist.

Erfindungsgemäße thermoplastische Polyurethane sind z.B. unter dem Handelsnamen Elastollan® SP9415 von der Firma BASF (BASF Polyurethanes GmbH, Lemförde, Deutschland) erhältlich.

Komponente (B)

Erfindungsgemäß ist die Komponente (B) mindestens ein Fließmittel.

"Mindestens ein Fließmittel (B)" bedeutet im Rahmen der vorliegenden Erfindung sowohl genau ein Fließmittel (B) als auch eine Mischung aus zwei oder mehreren Fließmitteln (B).

Fließmittel als solche sind dem Fachmann bekannt. Im Rahmen der vorliegenden Erfindung ist das mindestens eine Fließmittel (B) vorzugsweise eine anorganische Verbindung.

Das mindestens eine Fließmittel (B) ist beispielsweise ausgewählt aus der Gruppe bestehend aus Siliciumdioxid (Silica), Silikaten, Kieselsäuren, Metalloxiden, Mineralien, Boraten, Phosphaten, Sulfaten und Carbonaten.

Beispiele für geeignete Siliciumdioxide (Silica-Verbindungen) sind hydratisierte Siliciumdioxide, glasartige Siliciumdioxide und pyrogene Siliciumdioxide.

Beispiele für geeignete Silikate sind Alumo-Silikate, Alkali-Silikate, Erdalkali-Silikate, Alkali-Alumo-Silikate, Erdalkali-Alumo-Silikate, Calcium-Silikate und Magnesium-Silikate.

Beispiele für geeignete Kieselsäuren sind hydrophobe pyrogene Kieselsäuren.

Beispiele für geeignete Metalloxide sind Aluminiumoxid, Titandioxid und glasartige Oxide.

Beispiele für geeignete Mineralien sind Talk, Glimmer, Kaolin und Attapulgit.

Beispiele für geeignete Borate und Phosphate sind glasartige Borate und glasartige Phosphate.

Beispiele für geeignete Sulfate sind Magnesiumsulfat, Calciumsulfat und Bariumsulfat. Beispiele für geeignete Carbonate sind Magnesiumcarbonat, Calciumcarbonat und Bariumcarbonat.

Bevorzugt ist das mindestens eine Fließmittel (B) ausgewählt aus der Gruppe bestehend aus hydrophoben pyrogenen Kieselsäuren, Talk, Kaolin, Magnesiumsulfat, Calciumsulfat, Bariumsulfat, Magnesiumcarbonat, Calciumcarbonat und Bariumcarbonat.

Das mindestens eine Fließmittel (B) weist üblicherweise Partikel auf. Diese Partikel haben beispielsweise eine Größe (D90-Wert) $\leq 10\ \mu m$, bevorzugt $\leq 2\ \mu m$.

Unter dem "D90-Wert" wird im Rahmen der vorliegenden Erfindung die Partikelgröße verstanden, bei der 90 Vol.-% der Partikel bezogen auf das Gesamtvolumen der Partikel kleiner oder gleich dem D90-Wert sind und 10 Vol.-% der Partikel bezogen auf das Gesamtvolumen der Partikel größer als der D90-Wert sind.

Der D90-Wert wird im Rahmen der vorliegenden Erfindung bestimmt mittels Laserbeugung gemäß ISO 13320 (Horiba LA-960, Retsch Technology, Deutschland), wobei das Sinterpulver (SP) bzw. das mindestens eine Fließmittel (B) bei 1 bar vorher trocken dispergiert wurden. Die Auswertung erfolgt mit Hilfe der Fraunhofer-Methode.

Vorzugsweise enthält das Sinterpulver (SP) mindestens 0,05 Gew.-%, mehr bevorzugt mindestens 0,1 Gew.-%, und besonders bevorzugt mindestens 0,18 Gew.-%, der Komponente (B), bezogen auf die Summe der Gewichtsprozente der Komponenten (A), (B), (C), gegebenenfalls (D) und gegebenenfalls (E), bevorzugt bezogen auf das Gesamtgewicht des Sinterpulvers (SP).

Des Weiteren enthält das Sinterpulver (SP) vorzugsweise höchstens 0,5 Gew.-%, mehr bevorzugt höchstens 0,35 Gew.-%, und besonders bevorzugt höchstens 0,28 Gew.-%, der Komponente (B), bezogen auf die Summe der Gewichtsprozente der Komponenten (A), (B), (C), gegebenenfalls (D) und gegebenenfalls (E), bevorzugt bezogen auf das Gesamtgewicht des Sinterpulvers (SP).

Komponente (C)

Erfindungsgemäß ist die Komponente (C) mindestens ein organisches Additiv.

"Mindestens ein organisches Additiv " bedeutet im Rahmen der vorliegenden Erfindung sowohl genau ein organisches Additiv als auch eine Mischung aus zwei oder mehreren organischen Additiven.

Die Komponente (C) ist mindestens ein organisches Additiv ausgewählt aus mit Maleinsäure und/oder Maleinsäureanhydrid gegrafteten Polypropylen-Wachsen und Amid-Wachsen. Besonders bevorzugt ist die Komponente (C) ein N,N'-Alkylen-Difettsäureamid. Ganz besonders bevorzugt ist die Komponente (C) N,N'-Ethylendi(stearamid).

Geeignete organische Additive sind beispielsweise von den Firmen Clariant oder Baerlocher erhältlich. Ein Beispiel für ein geeignetes mit Maleinsäure und/oder Maleinsäureanhydrid gegraftetes Polypropylen-Wachs ist das Licocene PP MA 6452 TP von Clariant.

"Mit Maleinsäure und/oder Maleinsäureanhydrid gegraftet" bedeutet im Rahmen der vorliegenden Erfindung, dass die Polypropylen-Wachse verzweigt sind, wobei sie in ihrer Hauptkette Polypropylen und in ihrer verzweigten Kette Maleinsäure und/oder Maleinsäureanhydrid enthalten.

In einer bevorzugten Ausführungsform der vorliegenden Erfindung ist das mindestens eine organische Additiv (C) so ausgewählt, dass der Tropfpunkt $D_P$ des mindestens einen organischen Additivs (C) die folgende Bedingung (Formel I) erfüllt

$$(T_{M(A)} - 25°C) \leq D_P < (T_{M(A)} + 25°C) \qquad (I),$$

wobei $D_P$ der Tropfpunkt des mindestens einen organischen Additivs (C) und $T_{M(A)}$ die Schmelztemperatur des mindestens einen thermoplastischen Polyurethans (A) ist.

In einer mehr bevorzugten Ausführungsform der vorliegenden Erfindung ist das mindestens eine organische Additiv (C) so ausgewählt, dass der Tropfpunkt $D_P$ des mindestens einen organischen Additivs (C) die folgende Bedingung (Formel II) erfüllt

$$(T_{M(A)} - 20°C) \leq D_P < (T_{M(A)} + 20°C) \qquad \text{(II)}.$$

In einer besonders bevorzugten Ausführungsform der vorliegenden Erfindung ist das mindestens eine organische Additiv (C) so ausgewählt, dass der Tropfpunkt $D_P$ des mindestens einen organischen Additivs (C) die folgende Bedingung (Formel III) erfüllt

$$(T_{M(A)} - 15°C) \leq D_P < (T_{M(A)} + 15°C) \qquad \text{(III)}.$$

Insbesondere bevorzugt ist das mindestens eine organische Additiv (C) so ausgewählt, dass der Tropfpunkt $D_P$ des mindestens einen organischen Additivs (C) die folgende Bedingung (Formel IV) erfüllt

$$T_{M(A),\,Onset} \leq D_P < T_{M(A),\,Endset} \qquad \text{(IV)},$$

wobei $T_{M(A),\,Onset}$ den Anfang des Schmelzpeaks des mindestens einen thermoplastischen Polyurethans (A) und $T_{M(A),\,Endset}$ das Ende des Schmelzpeaks des mindestens einen thermoplastischen Polyurethans (A) bezeichnet.

Im Falle, dass der Tropfpunkt $D_P$ des mindestens einen organischen Additivs (C) nicht bestimmt werden kann, ist das mindestens eine organische Additiv (C) in einer bevorzugten Ausführungsform der vorliegenden Erfindung so ausgewählt, dass die Schmelztemperatur $T_{M(C)}$ des mindestens einen organischen Additivs (C) die folgende Bedingung (Formel V) erfüllt

$$(T_{M(A)} - 25°C) \leq T_{M(C)} < (T_{M(A)} + 25°C) \qquad \text{(V)},$$

wobei $T_{M(C)}$ die Schmelztemperatur des mindestens einen organischen Additivs (C) und $T_{M(A)}$ die Schmelztemperatur des mindestens einen thermoplastischen Polyurethans (A) ist.

In einer mehr bevorzugten Ausführungsform der vorliegenden Erfindung ist das mindestens eine organische Additiv (C) dann so ausgewählt, dass die Schmelztemperatur $T_{M(C)}$ des mindestens einen organischen Additivs (C) die folgende Bedingung (Formel VI) erfüllt

$$(T_{M(A)} - 20°C) \leq T_{M(C)} < (T_{M(A)} + 20°C) \qquad \text{(VI)}.$$

In einer besonders bevorzugten Ausführungsform der vorliegenden Erfindung ist das mindestens eine organische Additiv (C) dann so ausgewählt, dass die Schmelztemperatur $T_{M(C)}$ des mindestens einen organischen Additivs (C) die folgende Bedingung (Formel VII) erfüllt

$$(T_{M(A)} - 15°C) \leq T_{M(C)} < (T_{M(A)} + 15°C) \qquad \text{(VII)}.$$

Insbesondere bevorzugt ist das mindestens eine organische Additiv (C) dann so ausgewählt, dass die Schmelztemperatur $T_{M(C)}$ des mindestens einen organischen Additivs (C) die folgende Bedingung (Formel VIII) erfüllt

$$T_{M(A),\,Onset} \leq T_{M(C)} < T_{M(A),\,Endset} \qquad \text{(VIII)},$$

wobei $T_{M(A),\,Onset}$ den Anfang des Schmelzpeaks des mindestens einen thermoplastischen Polyurethans (A) und $T_{M(A),\,Endset}$ das Ende des Schmelzpeaks des mindestens einen thermoplastischen Polyurethans (A) bezeichnet.

Weiterhin wird das mindestens eine organische Additiv (C) vorzugsweise so ausgewählt, dass die gesamte Grenzflächenenergie $\gamma_S$ des Sinterpulvers (SP) $\leq 25$ mN·m$^{-1}$, bevorzugt $\leq 15$ mN·m$^{-1}$, und besonders bevorzugt $\leq 10$ mN·m$^{-1}$, ist. Der disperse Anteil der Grenzflächenenergie $\gamma_S^D$ sollte dabei vorzugsweise $\leq 20$ mN·m$^{-1}$, bevorzugt $\leq 11$

mN·m$^{-1}$, und besonders bevorzugt ≤ 7 mN·m$^{-1}$, betragen, und der polare Anteil der Grenzflächenenergie $\gamma_S^P$ sollte dabei vorzugsweise ≤ 5 mN m-1, bevorzugt ≤ 4 mN·m$^{-1}$, und besonders bevorzugt ≤ 3 mN·m$^{-1}$, betragen.

Die Berechnung der Grenzflächenenergie erfolgt im Rahmen der vorliegenden Erfindung mit Hilfe des Owens-Wendt Modells (Owens, D.K.; Wendt, R.C.; Jour. of Applied Polymer Science, 13, 1741, (1969)).

Dazu werden die pulverförmigen Proben auf eine selbst hergestellte Klebefolie (Acronal V215 auf PET-Folie) aufgebracht. Überschüssiges Material wird mit einer Luftdruckpistole entfernt. 8 bis 10 Tropfen an Testflüssigkeiten (Ethylenglycol, Formamide, Wasser) werden jeweils auf die Pulverschichten mit einem Tropfenvolumen von ca. 1,5 μL aufgebracht. Der Kontaktwinkel θ wird durch Tropfenkonturanalyse direkt nach dem ersten Kontakt mit der Oberfläche (5 s nach dem Abscheiden des Tropfens) bestimmt. Die Messung wird bei 23 °C durchgeführt. Als Analysegerät wird ein Drop Shape Analyzer DSA100 (Krüss GmbH, Deutschland) eingesetzt.

In Figur 2 sind der Kontaktwinkel θ, die Grenzflächenenergie der Testflüssigkeit $\gamma_L$, die Grenzflächenenergie des Sinterpulvers (SP) $\gamma_S$ und die Grenzflächenenergie $\gamma_{SL}$ zwischen Testflüssigkeit und Sinterpulver (SP) dargestellt. Zur Kontaktwinkelmessung wird die Testflüssigkeit (I) auf die Probe (II) aufgebracht.

Unter Zuhilfenahme der Gleichung nach Owens-Wendt (Formel IX) und dem gemessenen Kontaktwinkel θ kann über lineare Regression die Grenzflächenenergie des Pulvers $\gamma_S$ mit dem polaren $\gamma_S^P$ und dispersen Anteil $\gamma_S^P$ ermittelt werden:

$$\frac{\gamma_L(1 + cos\theta)}{2\left(\gamma_L^D\right)^{1/2}} = \left(\gamma_S^P\right)^{1/2}\frac{\left(\gamma_L^P\right)^{1/2}}{\left(\gamma_L^D\right)^{1/2}} + \left(\gamma_S^D\right)^{1/2} \qquad (IX)$$

Dabei sind folgende Zusammenhänge zu beachten (Formel X und Formel XI):

$$\gamma_L = \gamma_L^D + \gamma_L^P \qquad (X)$$

$$\gamma_S = \gamma_S^D + \gamma_S^P \qquad (XI)$$

Bedeutung der Variablen:

θ     Kontaktwinkel
$\gamma_L$     Grenzflächenenergie der Testflüssigkeit

$\gamma_L^D$     disperser Anteil der Grenzflächenenergie der Testflüssigkeit

$\gamma_L^P$     polarer Anteil der Grenzflächenenergie der Testflüssigkeit
$\gamma_S$     Grenzflächenenergie des Sinterpulvers (SP)

$\gamma_S^D$     disperser Anteil der Grenzflächenenergie des Sinterpulvers (SP)

$\gamma_S^P$     polarer Anteil der Grenzflächenenergie des Sinterpulvers (SP)

Vorzugsweise enthält das Sinterpulver (SP) mindestens 0,1 Gew.-%, mehr bevorzugt mindestens 0,2 Gew.-%, und besonders bevorzugt mindestens 0,4 Gew.-%, der Komponente (C), bezogen auf die Summe der Gewichtsprozente der Komponenten (A), (B), (C), gegebenenfalls (D) und gegebenenfalls (E), bevorzugt bezogen auf das Gesamtgewicht des Sinterpulvers (SP).

Des Weiteren enthält das Sinterpulver (SP) vorzugsweise höchstens 5,0 Gew.-%, mehr bevorzugt höchstens 3,0 Gew.-%, und besonders bevorzugt höchstens 1,1 Gew.-%, der Komponente (C), bezogen auf die Summe der Gewichtsprozente der Komponenten (A), (B), (C), gegebenenfalls (D) und gegebenenfalls (E), bevorzugt bezogen auf das Gesamtgewicht des Sinterpulvers (SP).

Komponente (D)

Die Komponente (D) ist mindestens ein weiteres Additiv.

"Mindestens ein weiteres Additiv" bedeutet im Rahmen der vorliegenden Erfindung sowohl genau ein weiteres Additiv als auch eine Mischung aus zwei oder mehreren weiteren Additiven.

Additive als solche sind dem Fachmann bekannt. Beispielsweise ist das mindestens eine weitere Additiv ausgewählt aus der Gruppe bestehend aus Antinukleierungsmitteln, Stabilisatoren, leitfähigen Additiven, Endgruppenfunktionalisierern, Farbstoffen, Antioxidationsmitteln (bevorzugt sterisch gehinderte Phenole), Flammschutzmitteln und Farbpigmenten.

Ein geeignetes Antinukleierungsmittel ist beispielsweise Lithiumchlorid. Geeignete Stabilisatoren sind beispielsweise Phenole, Phosphite, Metallseifen und Kupferstabilisatoren. Geeignete leitfähige Additive sind Kohlenstofffasern, Metalle, Edelstahlfasern, Carbonnanotubes und Ruß. Geeignete Endgruppenfunktionalisierer sind beispielsweise Terephthalsäure, Adipinsäure und Propionsäure. Geeignete Farbstoffe und Farbpigmente sind beispielsweise Ruß und Eisenchromoxide. Ein geeignetes Antioxidationsmittel ist beispielsweise Irganox® 245 der BASF SE.

Geeignete Metallseifen sind beispielsweise Metallstearate wie Magnesiumstearat, Calciumstearat, Zinkstearat und Natriumstearat, Metallalkylsulfonate wie Natriumlaurylsulfonat, Metallalkylsulfate und Metallalkylphosphate.

Enthält das Sinterpulver (SP) die Komponente (D), so enthält es vorzugsweise mindestens 0,1 Gew.-% der Komponente (D), mehr bevorzugt mindestens 0,2 Gew.-% der Komponente (D), bezogen auf die Summe der Gewichtsprozente der Komponenten (A), (B), (C), (D) und (E), bevorzugt bezogen auf das Gesamtgewicht des Sinterpulvers (SP).

Enthält das Sinterpulver (SP) die Komponente (D), so enthält es weiterhin vorzugsweise höchstens 5 Gew.-% der Komponente (D), mehr bevorzugt höchstens 2,5 Gew.-% der Komponente (D), bezogen auf die Summe der Gewichtsprozente der Komponenten (A), (B), (C), (D) und (E), bevorzugt bezogen auf das Gesamtgewicht des Sinterpulvers (SP).

Komponente (E)

Erfindungsgemäß ist die gegebenenfalls enthaltene Komponente (E) mindestens ein Verstärkungsmittel.

"Mindestens ein Verstärkungsmittel" bedeutet im Rahmen der vorliegenden Erfindung sowohl genau ein Verstärkungsmittel als auch eine Mischung aus zwei oder mehreren Verstärkungsmitteln.

Unter einem Verstärkungsmittel wird im Rahmen der vorliegenden Erfindung ein Material verstanden, das die mechanischen Eigenschaften von mit dem erfindungsgemäßen Verfahren hergestellten Formkörpern verbessert gegenüber Formkörpern, die das Verstärkungsmittel nicht enthalten.

Verstärkungsmittel als solche sind dem Fachmann bekannt. Die Komponente (E) kann beispielsweise kugelförmig, plättchenförmig oder faserförmig sein.

Bevorzugt ist das mindestens eine Verstärkungsmittel kugelförmig oder plättchenförmig.

Unter "plättchenförmig" wird im Rahmen der vorliegenden Erfindung verstanden, dass die Partikel des mindestens einen Verstärkungsmittels ein Verhältnis von Durchmesser zu Dicke im Bereich von 4 : 1 bis 10 : 1 aufweisen, bestimmt mittels Mikroskopie mit Bildauswertung nach Veraschung.

Geeignete Verstärkungsmittel sind dem Fachmann bekannt und beispielsweise ausgewählt aus der Gruppe bestehend aus Carbonnanotubes, Glaskugeln und Aluminiumsilikaten.

Bevorzugt ist das mindestens eine Verstärkungsmittel ausgewählt aus der Gruppe bestehend aus Glaskugeln und Aluminiumsilikaten. Diese Verstärkungsmittel können zudem epoxy-funktionalisiert sein.

Geeignete Aluminiumsilikate sind dem Fachmann als solche bekannt. Als Aluminiumsilikate werden Verbindungen bezeichnet, die $Al_2O_3$ und $SiO_2$ enthalten. Strukturell ist den Aluminiumsilikaten gemeinsam, dass die Siliziumatome tetraedrisch von Sauerstoffatomen koordiniert sind und die Aluminiumatome oktaedrisch von Sauerstoffatomen koordiniert sind. Aluminiumsilikate können darüber hinaus weitere Elemente enthalten.

Bevorzugt als Aluminiumsilikate sind Schichtsilikate. Besonders bevorzugt als Aluminiumsilikate sind kalzinierte Aluminiumsilikate, insbesondere bevorzugt sind kalzinierte Schichtsilikate. Das Aluminiumsilikat kann zudem epoxy-funktionalisiert sein

Ist das mindestens eine Verstärkungsmittel ein Aluminiumsilikat, kann das Aluminiumsilikat in beliebiger Form eingesetzt werden. Beispielsweise kann es als reines Aluminiumsilikat eingesetzt werden, ebenso ist es möglich, dass das Aluminiumsilikat als Mineral eingesetzt wird. Bevorzugt wird das Aluminiumsilikat als Mineral eingesetzt. Geeignete Aluminiumsilikate sind beispielsweise Feldspate, Zeolite, Sodalith, Sillimanit, Andalusit und Kaolin. Kaolin ist als Aluminiumsilikat bevorzugt.

Kaolin gehört zu den Tongesteinen und enthält im Wesentlichen das Mineral Kaolinit. Die Summenformel von Kaolinit ist $Al_2[(OH)_4/Si_2O_5]$. Kaolinit ist ein Schichtsilikat. Kaolin enthält neben Kaolinit üblicherweise noch weitere Verbindungen wie beispielsweise Titandioxid, Natriumoxide und Eisenoxide. Erfindungsgemäß bevorzugtes Kaolin enthält mindestens 98 Gew.-% Kaolinit, bezogen auf das Gesamtgewicht des Kaolins.

Für einen Fachmann ist es klar, dass die Komponente (E) von der Komponente (B) verschieden ist. Die Komponente (E) weist üblicherweise einen höheren Partikeldurchmesser auf als die Komponente (B), das heißt, sie weist beispielsweise eine Größe (D90-Wert) > 10 µm auf.

Enthält das Sinterpulver die Komponente (E), so enthält es vorzugsweise mindestens 5 Gew.-% der Komponente (E), mehr bevorzugt mindestens 10 Gew.-% der Komponente (E), bezogen auf die Summe der Gewichtsprozente der Komponenten (A), (B), (C), (D), und (E), bevorzugt bezogen auf das Gesamtgewicht des Sinterpulvers (SP).

Enthält das Sinterpulver die Komponente (E), so enthält es weiterhin vorzugsweise höchstens 30 Gew.-% der Komponente (E), mehr bevorzugt höchstens 20 Gew.-% der Komponente (E), bezogen auf die Summe der Gewichtsprozente der Komponenten (A), (B), (C), (D), und (E), bevorzugt bezogen auf das Gesamtgewicht des Sinterpulvers (SP).

Sinterverfahren

Ein weiterer Gegenstand der vorliegenden Erfindung ist ein Verfahren zur Herstellung eines Formkörpers umfassend die Schritte:

i) Bereitstellen einer Schicht des Sinterpulvers (SP),
ii) Belichten oder Erwärmen der in Schritt i) bereitgestellten Schicht des Sinterpulvers (SP).

In Schritt ii) wird die in Schritt i) bereitgestellte Schicht des Sinterpulvers (SP) belichtet oder erwärmt.

Beim Belichten oder Erwärmen schmilzt zumindest ein Teil der Schicht des Sinterpulvers (SP) auf. Das aufgeschmolzene Sinterpulver (SP) fließt ineinander und bildet eine homogene Schmelze. Nach dem Belichten kühlt der aufgeschmolzene Teil der Schicht des Sinterpulvers (SP) wieder ab und die homogene Schmelze erstarrt wieder.

Zur Belichtung eignen sich alle dem Fachmann bekannten Methoden. Bevorzugt erfolgt das Belichten in Schritt ii) mit einer Strahlungsquelle. Die Strahlungsquelle ist bevorzugt ausgewählt aus der Gruppe bestehend aus Infrarotstrahlern und Lasern. Als Infrarotstrahler sind Nahinfrarot-Strahler insbesondere bevorzugt.

Gegenstand der vorliegenden Erfindung ist daher auch ein Verfahren, bei dem das Belichten in Schritt ii) mit einer Strahlungsquelle erfolgt, die ausgewählt ist aus der Gruppe bestehend aus Lasern und Infrarotstrahlern.

Geeignete Laser sind dem Fachmann bekannt und beispielsweise Faserlaser, Nd:YAG Laser (Neodym-dotierter Yttrium-Aluminium-Granat-Laser) oder Kohlendioxidlaser. Der Kohlendioxidlaser hat üblicherweise eine Wellenlänge von 10,6 µm.

Wird als Strahlungsquelle beim Belichten in Schritt ii) ein Laser eingesetzt, so wird üblicherweise die in Schritt i) bereitgestellte Schicht des Sinterpulvers (SP) mit dem Laserstrahl lokal und kurzzeitig belichtet. Dabei werden nur die Teile des Sinterpulvers (SP), die vom Laserstrahl belichtet worden sind, selektiv aufgeschmolzen. Wird in Schritt ii) ein Laser eingesetzt, wird das erfindungsgemäße Verfahren auch als selektives Lasersintern bezeichnet. Das selektive Lasersintern ist dem Fachmann als solches bekannt.

Wird als Strahlungsquelle beim Belichten in Schritt ii) ein Infrarot-Strahler, insbesondere ein Nahinfrarot-Strahler eingesetzt, so liegt die Wellenlänge, mit der die Strahlungsquelle strahlt, üblicherweise im Bereich von 780 nm bis 1000 µm, bevorzugt im Bereich von 780 nm bis 50 µm und insbesondere im Bereich von 780 nm bis 2,5 µm.

Beim Belichten in Schritt ii) wird dann üblicherweise die gesamte Schicht des Sinterpulvers (SP) belichtet. Damit beim Belichten nur die gewünschten Bereiche des Sinterpulvers (SP) aufschmelzen, wird üblicherweise eine Infrarot-absorbierende Tinte (IR-absorbierende Tinte) auf die Bereiche aufgebracht, die aufschmelzen sollen.

Das Verfahren zur Herstellung des Formkörpers umfasst dann bevorzugt zwischen Schritt i) und Schritt ii) einen Schritt i-1), Aufbringen mindestens einer IR-absorbierenden Tinte, auf zumindest einen Teil der in Schritt i) bereitgestellten Schicht des Sinterpulvers (SP).

Ein weiterer Gegenstand der vorliegenden Erfindung ist daher auch ein Verfahren zur Herstellung eines Formkörpers, umfassend die Schritte

i) Bereitstellen einer Schicht eines Sinterpulvers (SP), das die Komponenten 59,5 bis 99,85 Gew.-%, bezogen auf die Summe der Gewichtsprozente (A), (B) (C), (D) und (E), mindestens eines thermoplastischen Polyurethans (A),

0,05 bis 0,5 Gew.-%, bezogen auf die Summe der Gewichtsprozente (A), (B) (C), (D) und (E), mindestens eines Fließmittels (B),

0,1 bis 5 Gew.-%, bezogen auf die Summe der Gewichtsprozente (A), (B) (C), (D) und (E), mindestens eines organischen Additivs (C),

0 bis 5 Gew.-%, bezogen auf die Summe der Gewichtsprozente (A), (B) (C), (D) und (E), mindestens eines weiteren Additivs (D) und

0 bis 30 Gew.-%, bezogen auf die Summe der Gewichtsprozente (A), (B) (C), (D) und (E), mindestens eines Verstärkungsmittels (E)

enthält, wobei das mindestens eine organische Additiv (C) ausgewählt ist aus der Gruppe bestehend aus mit Maleinsäure und/oder Maleinsäureanhydrid gegrafteten Polypropylen-Wachsen und Amid-Wachsen,

i-1) Aufbringen mindestens einer IR-absorbierenden Tinte auf zumindest einen Teil der in Schritt i) bereitgestellten Schicht des Sinterpulvers (SP)

ii) Belichten der in Schritt i) bereitgestellten Schicht des Sinterpulvers (SP).

Als IR-absorbierende Tinten eignen sich alle dem Fachmann bekannten IR-absorbierenden Tinten, insbesondere dem Fachmann bekannte IR-absorbierende Tinte für das High Speed Sintern.

IR-absorbierende Tinten enthalten üblicherweise zumindest einen Absorber, der IR-Strahlung, bevorzugt NIR-Strahlung (Nahinfrarot Strahlung) absorbiert. Beim Belichten der Schicht des Sinterpulvers (SP) in Schritt ii) wird durch die Absorption der IR-Strahlung, bevorzugt der NIR-Strahlung, durch den in der IR-absorbierenden Tinten enthaltenen IR-Absorber der Teil der Schicht des Sinterpulvers (SP), auf den die IR-absorbierende Tinte aufgebracht worden ist, selektiv erwärmt.

Die IR-absorbierende Tinte kann neben dem zumindest einen Absorber eine Trägerflüssigkeit enthalten. Geeignete Trägerflüssigkeiten sind dem Fachmann bekannt und sind beispielsweise Öle oder Wasser.

Der zumindest eine Absorber kann in der Trägerflüssigkeit gelöst oder dispergiert vorliegen.

Erfolgt die Belichtung in Schritt ii) mit einer Strahlungsquelle, die ausgewählt ist aus Infrarot-Strahlern und wird Schritt i-1) durchgeführt, dann wird das erfindungsgemäße Verfahren auch als *High-Speed Sintering (HSS)* oder *Multijet-Fusion-Verfahren (MJF)* bezeichnet. Diese Verfahren sind dem Fachmann als solche bekannt. Bei dem *Multijet-Fusion-Verfahren (MJF)* wird üblicherweise auch eine nicht-absorbierende Tinte, ein "Detailing Agent", eingesetzt.

Im Anschluss an den Schritt ii) wird die Schicht des Sinterpulvers (SP) üblicherweise um die Schichtdicke der in Schritt i) bereitgestellten Schicht des Sinterpulvers (SP) abgesenkt und eine weitere Schicht des Sinterpulvers (SP) aufgebracht. Diese wird anschließend gemäß Schritt ii) erneut belichtet oder erwärmt.

Dadurch verbindet sich zum einen die obere Schicht des Sinterpulvers (SP) mit der unteren Schicht des Sinterpulvers (SP), außerdem verbinden sich die Partikel des Sinterpulvers (SP) innerhalb der oberen Schicht durch Aufschmelzen miteinander.

Im erfindungsgemäßen Verfahren können die Schritte i) und ii) sowie gegebenenfalls i1) also wiederholt werden.

Indem das Absenken des Pulverbetts, das Aufbringen des Sinterpulvers (SP) und das Belichten oder Erwärmen und damit das Aufschmelzen des Sinterpulvers (SP) wiederholt werden, werden dreidimensionale Formkörper hergestellt. Es ist möglich, Formkörper herzustellen, die beispielsweise auch Hohlräume aufweisen. Ein zusätzliches Stützmaterial ist nicht notwendig, da das nicht aufgeschmolzene Sinterpulver (SP) selbst als Stützmaterial fungiert.

Ein weiterer Gegenstand der vorliegenden Erfindung ist daher auch ein Formkörper erhältlich über ein Sinterverfahren unter Verwendung eines erfindungsgemäßen Sinterpulvers (SP).

Das erfindungsgemäße Sinterpulver (SP) eignet sich besonders gut zur Verwendung in einem Sinterverfahren.

Gegenstand der vorliegenden Erfindung ist daher auch die Verwendung eines Sinterpulvers (SP), das die Komponenten

59,5 bis 99,85 Gew.-%, bezogen auf die Summe der Gewichtsprozente (A), (B) (C), (D) und (E), mindestens eines thermoplastischen Polyurethans (A),

0,05 bis 0,5 Gew.-%, bezogen auf die Summe der Gewichtsprozente (A), (B) (C), (D) und (E), mindestens eines Fließmittels (B),

0,1 bis 5 Gew.-%, bezogen auf die Summe der Gewichtsprozente (A), (B) (C), (D) und (E), mindestens eines organischen Additivs (C),

0 bis 5 Gew.-%, bezogen auf die Summe der Gewichtsprozente (A), (B) (C), (D) und (E), mindestens eines weiteren Additivs (D) und

0 bis 30 Gew.-%, bezogen auf die Summe der Gewichtsprozente (A), (B) (C), (D) und (E), mindestens eines Verstärkungsmittels (E)

enthält, wobei das mindestens eine organische Additiv (C) ausgewählt ist aus der Gruppe bestehend aus mit Maleinsäure und/oder Maleinsäureanhydrid gegrafteten Polypropylen-Wachsen und Amid-Wachsen, in einem Sinterverfahren, vorzugsweise in einem selektiven Lasersinterverfahren (SLS) oder in einem Multi-Jet-Fusion-Verfahren (MJF).

Es ist allerdings auch möglich, das erfindungsgemäße Sinterpulver (SP) zur Herstellung von Formkörpern neben dem selektiven Lasersinterverfahren (SLS) oder dem Multi-Jet-Fusion-Verfahren (MJF) auch in anderen pulverbasierten 3D-Druckverfahren einzusetzen.

Ein weiterer Gegenstand der vorliegenden Erfindung ist die Verwendung mindestens eines Fließmittels (B) und mindestens eines organischen Additivs (C) in einem Sinterpulver (SP), das mindestens ein thermoplastisches Polyurethan (A) enthält, zur Verbesserung der Rieselfähigkeit und Koaleszenz des Sinterpulvers (SP), wobei das mindestens eine organische Additiv (C) ausgewählt ist aus der Gruppe bestehend aus mit Maleinsäure und/oder Maleinsäureanhydrid gegrafteten Polypropylen-Wachsen und Amid-Wachsen.

Formkörper

Durch das erfindungsgemäße Verfahren wird ein Formkörper erhalten. Der Formkörper kann nach dem Abkühlen aus dem Pulverbett entnommen werden. Gegebenenfalls anhaftende Partikel des Sinterpulvers, die nicht aufgeschmolzen worden sind, können mechanisch nach bekannten Verfahren von der Oberfläche entfernt werden. Verfahren zur Oberflächenbehandlung des Formkörpers umfassen beispielsweise das Gleitschleifen oder Gleitspanen sowie Sandstrahlen, Glaskugelstrahlen oder Mikrostrahlen.

Es ist außerdem möglich, die erhaltenen Formkörper weiterzuverarbeiten oder beispielsweise die Oberfläche zu behandeln.

Ein weiterer Gegenstand der vorliegenden Erfindung ist daher ein Formkörper, erhältlich nach dem erfindungsgemäßen Verfahren.

Der erhaltene Formkörper weist vorzugsweise eine Zugfestigkeit von ≥ 5 MPa, mehr bevorzugt von ≥ 7 MPa, und besonders bevorzugt von ≥ 9 MPa, auf. Des Weiteren weist er vorzugsweise eine Bruchdehnung von ≥ 100%, mehr bevorzugt von ≥ 200%, und besonders bevorzugt von ≥ 300%, auf.

Die Bestimmung der Zugfestigkeit und der Bruchdehnung erfolgt im Rahmen der vorliegenden Erfindung mit Hilfe des sogenannten Zugversuchs nach DIN53504. Als Testgeometrie wurde der Schulterstab S2 verwendet, und Proben wurden mit 200 mm/min gezogen (Z010, Zwick/Roell, Deutschland). Für die Messungen wurden immer Probenkörper genommen die in X-Richtung, horizontal im Bauraumlayout gedruckt wurden.

Die erhaltenen Formkörper enthalten üblicherweise 59,5 bis 99,85 Gew.-% der Komponente (A), 0,05 bis 0,5 Gew.-% der Komponente (B), 0,1 bis 5 Gew.-% der Komponente (C), 0 bis 5 Gew.-% der Komponente (D) und 0 bis 30 Gew.-% der Komponente (E), jeweils bezogen auf das Gesamtgewicht des Formkörpers.

Bevorzugt enthält der Formkörper im Bereich von 74,15 bis 99,7 Gew.-% der Komponente (A), im Bereich von 0,1 bis 0,35 Gew.-% der Komponente (B), im Bereich von 0,2 bis 3 Gew.-% der Komponente (C), im Bereich von 0 bis 2,5 Gew.-% der Komponente (D) und im Bereich von 0 bis 20 Gew.-% der Komponente (E), jeweils bezogen auf das Gesamtgewicht des Formkörpers.

Am meisten bevorzugt enthält der Formkörper im Bereich von 76,12 bis 99,42 Gew.-% der Komponente (A), im Bereich von 0,18 bis 0,28 Gew.-% der Komponente (B), im Bereich von 0,4 bis 1,1 Gew.-% der Komponente (C), im Bereich von 0 bis 2,5 Gew.-% der Komponente (D) und im Bereich von 0 bis 20 Gew.-% der Komponente (E), jeweils bezogen auf das Gesamtgewicht des Formkörpers.

Die Gewichtsprozente der Komponenten (A), (B), (C), (D) und (E) addieren sich üblicherweise zu 100 Gew.-%.

Enthält der Formkörper die Komponente (D), kann er beispielsweise im Bereich von 0,1 bis 5 Gew.-% der Komponente (D), vorzugsweise im Bereich von 0,2 bis 2,5 Gew.-%, der Komponente (D), bezogen auf das Gesamtgewicht des Formkörpers, enthalten.

Enthält der Formkörper die Komponente (E), kann er beispielsweise im Bereich von 5 bis 30 Gew.-% der Komponente (E), vorzugsweise im Bereich von 10 bis 20 Gew.-%, der Komponente (E), bezogen auf das Gesamtgewicht des Formkörpers, enthalten.

Wenn der Formkörper die Komponente (D) und/oder die Komponente (E) enthält, werden üblicherweise die Gewichtsprozente des im Formkörper enthaltenen mindestens einen thermoplastischen Polyurethans (A) entsprechend reduziert, so dass die Summe der Gewichtsprozente des mindestens einen thermoplastischen Polyurethans (A), der Komponente (B), der Komponente (C) sowie der Komponente (D) und/oder der Komponente (E) 100 Gew.-% ergibt.

Enthält der Formkörper die Komponente (D), so enthält er somit beispielsweise im Bereich von 59,5 bis 99,75 Gew.-% der Komponente (A), im Bereich von 0,05 bis 0,5 Gew.-% der Komponente (B), im Bereich von 0,1 bis 5 Gew.-% der Komponente (C), im Bereich von 0,1 bis 5 Gew.-% der Komponente (D) und im Bereich von 0 bis 30 Gew.-% der Komponente (E), bezogen auf das Gesamtgewicht des Formkörpers.

Enthält der Formkörper die Komponente (D), so enthält er somit vorzugsweise im Bereich von 74,15 bis 99,5

**EP 4 188 972 B1**

Gew.-% der Komponente (A), im Bereich von 0,1 bis 0,35 Gew.-% der Komponente (B), im Bereich von 0,2 bis 3 Gew.-% der Komponente (C), im Bereich von 0,2 bis 2,5 Gew.-% der Komponente (D) und im Bereich von 0 bis 20 Gew.-% der Komponente (E), bezogen auf das Gesamtgewicht des Formkörpers.

Enthält der Formkörper die Komponente (D), so enthält er somit mehr bevorzugt im Bereich von 76,12 bis 99,22 Gew.-% der Komponente (A), im Bereich von 0,18 bis 0,28 Gew.-% der Komponente (B), im Bereich von 0,4 bis 1,1 Gew.-% der Komponente (C), im Bereich von 0,2 bis 2,5 Gew.-% der Komponente (D) und im Bereich von 0 bis 20 Gew.-% der Komponente (E), bezogen auf das Gesamtgewicht des Formkörpers.

Enthält der Formkörper die Komponente (E), so enthält er somit beispielsweise im Bereich von 59,5 bis 94,85 Gew.-% der Komponente (A), im Bereich von 0,05 bis 0,5 Gew.-% der Komponente (B), im Bereich von 0,1 bis 5 Gew.-% der Komponente (C), im Bereich von 0 bis 5 Gew.-% der Komponente (D) und im Bereich von 5 bis 30 Gew.-% der Komponente (E), bezogen auf das Gesamtgewicht des Formkörpers.

Enthält der Formkörper die Komponente (E), so enthält er somit vorzugsweise im Bereich von 74,15 bis 89,7 Gew.-% der Komponente (A), im Bereich von 0,1 bis 0,35 Gew.-% der Komponente (B), im Bereich von 0,2 bis 3 Gew.-% der Komponente (C), im Bereich von 0 bis 2,5 Gew.-% der Komponente (D) und im Bereich von 10 bis 20 Gew.-% der Komponente (E), bezogen auf das Gesamtgewicht des Formkörpers.

Enthält der Formkörper die Komponente (E), so enthält er somit mehr bevorzugt im Bereich von 76,12 bis 89,42 Gew.-% der Komponente (A), im Bereich von 0,18 bis 0,28 Gew.-% der Komponente (B), im Bereich von 0,4 bis 1,1 Gew.-% der Komponente (C), im Bereich von 0 bis 2,5 Gew.-% der Komponente (D) und im Bereich von 10 bis 20 Gew.-% der Komponente (E), bezogen auf das Gesamtgewicht des Formkörpers.

Enthält der Formkörper die Komponenten (D) und (E), so enthält er somit beispielsweise im Bereich von 59,5 bis 94,75 Gew.-% der Komponente (A), im Bereich von 0,05 bis 0,5 Gew.-% der Komponente (B), im Bereich von 0,1 bis 5 Gew.-% der Komponente (C), im Bereich von 0,1 bis 5 Gew.-% der Komponente (D) und im Bereich von 5 bis 30 Gew.-% der Komponente (E), bezogen auf das Gesamtgewicht des Formkörpers.

Enthält der Formkörper die Komponenten (D) und (E), so enthält er somit vorzugsweise im Bereich von 74,15 bis 89,5 Gew.-% der Komponente (A), im Bereich von 0,1 bis 0,35 Gew.-% der Komponente (B), im Bereich von 0,2 bis 3 Gew.-% der Komponente (C), im Bereich von 0,2 bis 2,5 Gew.-% der Komponente (D) und im Bereich von 10 bis 20 Gew.-% der Komponente (E), bezogen auf das Gesamtgewicht des Formkörpers.

Enthält der Formkörper die Komponenten (D) und (E), so enthält er somit mehr bevorzugt im Bereich von 76,12 bis 89,22 Gew.-% der Komponente (A), im Bereich von 0,18 bis 0,28 Gew.-% der Komponente (B), im Bereich von 0,4 bis 1,1 Gew.-% der Komponente (C), im Bereich von 0,2 bis 2,5 Gew.-% der Komponente (D) und im Bereich von 10 bis 20 Gew.-% der Komponente (E), bezogen auf das Gesamtgewicht des Formkörpers.

Im Allgemeinen handelt es sich bei der Komponente (A) um die Komponente (A), die im Sinterpulver (SP) enthalten war. Ebenso handelt es sich bei der Komponente (B) um die Komponente (B), die im Sinterpulver (SP) enthalten war, bei der Komponente (C) um die Komponente (C), die im Sinterpulver (SP) enthalten war, bei der Komponente (D) um die Komponente (D), die im Sinterpulver (SP) enthalten war und bei der Komponente (E) um die Komponente (E), die im Sinterpulver (SP) enthalten war.

Wenn Schritt i-1) durchgeführt worden ist, enthält der Formkörper zudem üblicherweise Restbestandteile der IR-absorbierenden Tinte.

Dem Fachmann ist klar, dass durch die Belichtung oder das Erwärmen des Sinterpulvers (SP) die Komponenten (A), (B) und (C) sowie gegebenenfalls (D) und (E) chemische Reaktionen eingehen können und sich dadurch verändern können. Derartige Reaktionen sind dem Fachmann bekannt.

Bevorzugt gehen die Komponenten (A), (B) und (C) sowie gegebenenfalls (D) und (E) beim Belichten in Schritt ii) keine chemische Reaktion ein, sondern das Sinterpulver (SP) schmilzt lediglich auf.

Nachfolgend wird die Erfindung anhand von Beispielen näher erläutert, ohne sie hierauf zu beschränken.

Beispiele

Es werden die folgenden *Komponenten* eingesetzt:

| Komponente (A): | Thermoplastisches Polyurethan (TPU); Elastollan SP9415, BASF SE |
|---|---|
| Komponente (B1): | Hydrophobe pyrogene Kieselsäure; Aerosil R 812, Evonik, Deutschland |
| Komponente (B2): | Hydrophobe pyrogene Kieselsäure; HDK H20, Wacker Chemie |
| Komponente (B3): | Hydrophobe pyrogene Kieselsäure; Aerosil R 972, Evonik, Deutschland |
| Komponente (C): | N,N'-Ethylendi(stearamid), Tropfpunkt $D_P$ = 142°C |

*Messmethoden:*

Bestimmung der Grenzflächenenergie des Sinterpulvers (SP)

Die Berechnung der Grenzflächenenergie des Sinterpulvers (SP) erfolgte mit Hilfe des Owens-Wendt Modells (Owens, D.K.; Wendt, R.C.; Journal of Applied Polymer Science, 13, 1741, (1969)).

Dazu wurden die pulverförmigen Proben auf eine selbst hergestellte Klebefolie (Acronal V215 auf PET-Folie) aufgebracht. Überschüssiges Material wurde mit einer Luftdruckpistole entfernt. 8 bis 10 Tropfen der in Tabelle 1 aufgeführten Testflüssigkeiten wurden jeweils auf die Pulverschichten mit einem Tropfenvolumen von ca. 1,5 µL aufgebracht. Der Kontaktwinkel θ wurde durch Tropfenkonturanalyse direkt nach dem ersten Kontakt mit der Oberfläche (5 s nach dem Abscheiden des Tropfens) bestimmt. Die Messung wurde bei 23 °C durchgeführt. Als Analysegerät wurde ein Drop Shape Analyzer DSA100 (Krüss GmbH, Deutschland) eingesetzt.

In Figur 2 sind der Kontaktwinkel θ, die Grenzflächenenergie der Testflüssigkeit $\gamma_L$, die Grenzflächenenergie des Sinterpulvers (SP) $\gamma_S$ und die Grenzflächenenergie $\gamma_{SL}$ zwischen Testflüssigkeit und Sinterpulver (SP) dargestellt. Zur Kontaktwinkelmessung wird die Testflüssigkeit (I) auf die Probe (II) aufgebracht.

Tabelle 1

| | Grenzflächenenergie (mN m$^{-1}$) | | |
|---|---|---|---|
| | Disperser Anteil ($\gamma_L^D$) | Polarer Anteil ($\gamma_L^P$) | Total ($\gamma_L$) |
| Ethylenglycol | 26,4 | 21,3 | 47,7 |
| Formamide | 39,5 | 18,7 | 58,2 |
| Wasser | 21,8 | 51,0 | 72,8 |

Unter Zuhilfenahme der Gleichung nach Owens-Wendt (Formel IX) und dem gemessenen Kontaktwinkel $\theta$ kann über lineare Regression die Grenzflächenenergie des Pulvers $\gamma_S$ mit dem polaren $\gamma_S^P$ und dispersen Anteil $\gamma_S^P$ ermittelt werden:

$$\frac{\gamma_L(1+cos\theta)}{2\left(\gamma_L^D\right)^{1/2}} = \left(\gamma_S^P\right)^{1/2}\frac{\left(\gamma_L^P\right)^{1/2}}{\left(\gamma_L^D\right)^{1/2}} + \left(\gamma_S^D\right)^{1/2} \tag{IX}$$

Dabei sind folgende Zusammenhänge zu beachten (Formel X und Formel XI):

$$\gamma_L = \gamma_L^D + \gamma_L^P \tag{X}$$

$$\gamma_S = \gamma_S^D + \gamma_S^P \tag{XI}$$

Bedeutung der Variablen:

$\theta$    Kontaktwinkel

$\gamma_L$    Grenzflächenenergie der Testflüssigkeit

$\gamma_L^D$      disperser Anteil der Grenzflächenenergie der Testflüssigkeit

$\gamma_L^P$      polarer Anteil der Grenzflächenenergie der Testflüssigkeit

$\gamma_S$    Grenzflächenenergie des Sinterpulvers (SP)

$\gamma_S^D$      disperser Anteil der Grenzflächenenergie des Sinterpulvers (SP)

$\gamma_S^P$      polarer Anteil der Grenzflächenenergie des Sinterpulvers (SP)

Bestimmung des D50-Werts des Sinterpulvers (SP) und des D90-Werts des mindestens einen Fließmittels (Komponente (B))

Die Partikelgrößen wurden bestimmt mittels Laserbeugung gemäß ISO 13320 (Horiba LA-960, Retsch Technology, Deutschland), wobei das Sinterpulver (SP) bzw. das mindestens eine Fließmittel (B) bei 1 bar vorher trocken dispergiert wurden. Die Auswertung erfolgte mit Hilfe der Fraunhofer-Methode.

Bestimmung des Tropfpunktes ($D_p$) des mindestens einen organischen Additivs (Komponente (C))

Der Tropfpunkt ($D_p$) der organischen Additive wurde nach ISO 2176 mit einem Tropfpunktmessgerät (AD0566-600, Scavini, Italy) gemessen.

Bestimmung der Schmelztemperatur ($T_{M(SP)}$) des Sinterpulvers (SP)

Die Schmelztemperatur wurde mittels DSC (Differential Scanning Calorimetry, Discovery series DSC, TA Instruments) gemäß DIN EN ISO 11357 bestimmt.

Bei den DSC-Messungen wurde die Probe unter Stickstoffatmosphäre folgendem Temperaturzyklus unterworfen: 5 Minuten bei minus 80°C, danach Aufheizen auf mindestens 200°C mit 20 °C/Minute (1. Heizlauf (H1)), dann 5 Minuten bei mindestens 200°C, dann Abkühlen auf minus 80°C mit 20 °C/Minute, dann 5 Minuten bei minus 80°C, dann Aufheizen auf mindestens 200°C mit 20 °C/Minute (2. Heizlauf (H2)). Die Schmelztemperatur ($T_{M(SP)}$) entsprach dann der Temperatur am Maximum des Aufschmelzpeaks des Heizlaufs (H1). Falls im Bereich zwischen $T_M^{Onset}$ und $T_M^{Endset}$ mehrere lokale Maxima auftreten, wird als Schmelztemperatur $T_M$ der numerische Mittelwert der jeweiligen lokalen Maxima verstanden.

Bestimmung der Schüttdichte

Die Schüttdichte wurde nach DIN EN ISO 60 bestimmt.

Bestimmung der Zugfestigkeit und Bruchdehnung

Die Bestimmung der Zugfestigkeit und der Bruchdehnung wurde mit Hilfe des sogenannten Zugversuchs nach DIN 53504 ermittelt. Als Testgeometrie wurde der Schulterstab S2 verwendet, und Proben wurden mit 200 mm/min gezogen (Z010, Zwick/Roell, Deutschland). Für die Messungen wurden immer Probenkörper genommen die in X-Richtung, horizontal im Bauraumlayout gedruckt wurden.

Bestimmung der Schmelzvolumenrate des Sinterpulvers (SP) (melt volume rate, MVR)

Die Schmelzvolumenrate wurde nach DIN EN ISO 1133 ermittelt (mi2.1, Göttfert, Deutschland). Dazu wurde das Sinterpulver (SP) 2 Stunden bei 110°C unter Stickstoff vorgetrocknet und anschließend mit einer Belastung von 2,16 kg und bei einer Temperatur = ($T_{M(SP)}$ + 40°C) gemessen.

Herstellung des Sinterpulvers (SP)

*Erfindungsgemäßes Beispiel 1 (B1)*

Komponente (A) wurde 48 Stunden bei 100°C in trockener Stickstoffatmosphäre getempert. Anschließend wurden 0,05 Gew.-% der Komponente (B1) und 1 Gew.-% der Komponente (C) zugegeben und die Mischung mechanisch unter Tiefkälte (kryogene Zerkleinerung) in einer Stiftmühle (GSM 250, Gotic, Deutschland) zu Pulver verarbeitet und anschließend durch eine Siebmaschine (Rüttelsieb; 0,1 x 0,3 mm Langmaschen) klassifiziert. Nach der Vermahlung wurden nochmals 0,15 Gew.-% der Komponete (B1) zugemischt (Thermomix TM5, Vorwerk; 5 Minuten bei 2000 Umdrehungen/Minute).

*Erfindungsgemäßes Beispiel 2 (B2)*

Für dieses Beispiel wurde eine Zusammensetzung analog zu Beispiel 1 hergestellt. Dabei wurde nach der Vermahlung zusätzlich noch 1 Gew.-% der Komponente (C) zugemischt (*N,N'*-Ethylendi(stearamid), Tropfpunkt 142 °C).

*Vergleichsbeispiel 3 (VB3)*

Es wurde Beispiel 2 aus DE 10 2017 124 047 A1 nachgearbeitet.

*Vergleichsbeispiel 4 (VB4)*

Für dieses Vergleichsbeispiel wurde eine Zusammensetzung analog zu Beispiel 1 hergestellt wobei die Komponente (C) nicht eingesetzt wurde. Dabei wurden 0,55 Gew.-% statt 0,15 Gew.-% der Komponente (B1) nach der Vermahlung zugemischt.

*Vergleichsbeispiel 5 (VB5)*

Für dieses Vergleichsbeispiel wurde eine Zusammensetzung analog zu Beispiel 1 hergestellt. Dabei wurden nach der Vermahlung noch 5 Gew.-% der Komponente (C) zusätzlich zugefügt.

*Vergleichsbeispiel 6 (VB6)*

Es wurde Beispiel 1 aus EP 3 157 737 B1 nachgearbeitet.

Die vorgenannten Mengen der Komponenten und die Eigenschaften der hergestellten Sinterpulver (SP) sind in Tabelle 2 angegeben.

Tabelle 2

| Beispiel / Vergleichsbeispiel | B1 | B2 | VB3 | VB4 | VB5 | VB6 |
|---|---|---|---|---|---|---|
| **Komponente (A) (Gew.-%)** | 98,8 | 97,8 | 99,8 | 99,4 | 93,8 | - |
| **TPU, synthetisiert nach EP 3 157 737 B1 (Gew.-%)** | - | - | - | - | - | 99,8 |
| **Komponente (B) (= B1 + B2 + B3) (Gew.-%)** | 0,2 | 0,2 | 0,2 | 0,6 | 0,2 | 0,2 |
| **Komponente (C) (Gew.-%)** | 1,0 | 2,0 | - | - | 6,0 | - |
| **Schüttdichte (g/L)** | 524 | 526 | 500 | 536 | 529 | 490 |
| **Kontaktwinkel Wasser (°)** | 134,2 | 135,3 | 126,9 | 121,4 | 137,7 | 125,3 |
| **Kontaktwinkel Ethylenglycol (°)** | 124,6 | 127,1 | 100,6 | 95,9 | 134,3 | 99,5 |
| **Kontaktwinkel Formamide (°)** | 125,9 | 127,3 | 92,8 | 84,2 | 131,2 | 94,5 |
| **Grenzflächenenergie Dispers (mN/m)** | 2,6 | 2,5 | 27,7 | 33,6 | 1,0 | 28,6 |
| **Grenzflächenenergie Polar (mN/m)** | 0,2 | 0,2 | 2,1 | 2,0 | 0,4 | 2,0 |
| **Grenzflächenenergie Total (mN/m)** | 2,8 | 2,5 | 29,8 | 35,6 | 1,4 | 31,1 |
| **Partikelgröße D50 (μm)** | 79 | 77 | 72 | 71 | 74 | 75 |
| **Schmelzpunkt $T_{M(SP)}$ (°C)** | 140 | 140 | 140 | 140 | 140 | 130 |
| **Schmelzvolumenrate MVR (cm³/10min)** | 49 | 53 | 46 | 47 | 54 | 28 |
| **Durchsatz bei Produktion (Vermahlung + Sieben) (kg/h)** | 125 | 125 | 30 | 30 | 125 | 20 |

Herstellung der Formkörper

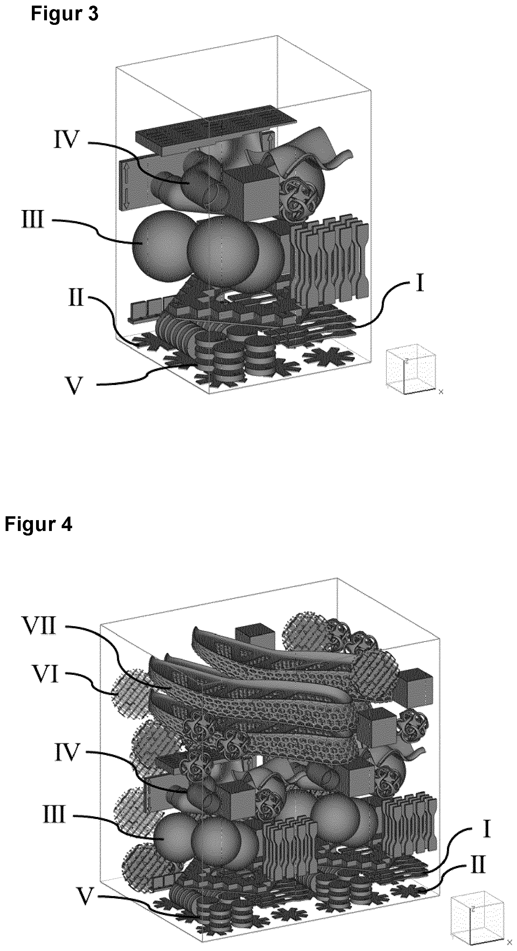

Bei den Fertigungsbeispielen 1 bis 6 wurde jeweils das identische Bauraumlayout verwendet. Das verwendete Bauraumlayout ist in Figur 3 dargestellt. Die folgenden Teile wurden im Bauraumlayout aufgenommen: 37 Zugstäbe (I) (X- und Z-Orientierung), 9 Curl-Kreuze (II) und 41 weitere technische Testteile wie Hohlkugeln (III), Röhren (IV), Scheiben (V) und anderen Freiformkörper. Die Freiformkörper dienten insbesondere zur Überprüfung der Bauteilgüte. Insgesamt hat das Bauraumlayout 87 Testteile, Abmaße 180 x 180 x 226 mm, und eine Packdichte von 7.7%.

Bei den Fertigungsbeispielen 10 bis 12 wurde ebenfalls jeweils das identische Bauraumlayout verwendet. Dabei handelte es sich um ein angepasstes Bauraumlayout. Dieses ist in Figur 4 dargestellt. Die folgenden Teile wurden im Bauraumlayout aufgenommen: 74 Zugstäbe (I) (X- und Z-Orientierung), 18 Curl-Kreuze (II), 120 weitere technische Testteile wie Hohlkugeln (III), Röhren (IV), Scheiben (V), Gitterstrukturen (VI), Schuhsohlen (VII) und weiteren Freiformkörper. Die Freiformkörper dienten insbesondere zur Überprüfung der Bauteilgüte. Insgesamt hat das Bauraumlayout 87 Testteile, Abmaßen 380 x 284 x 371 mm, und eine Packdichte von 7.3%.

*Fertigungsbeispiel 1 (F1B1)*

Das Sinterpulver (SP) aus dem erfindungsgemäßen Beispiel 1 (B1) wurde mittels einer handelsüblichen Lasersintermaschine (Farsoon, HT251P, China) zu Formkörpern verarbeitet. Die Verarbeitungsparameter beim Lasersintern sind in der Tabelle 3 angegeben.

*Fertigungsbeispiel 2 (F1B2)*

Das Sinterpulver (SP) aus dem erfindungsgemäßen Beispiel 2 (B2) wurde mittels einer handelsüblichen Lasersintermaschine (Farsoon, HT251P, China) zu Formkörpern verarbeitet. Die Verarbeitungsparameter beim Lasersintern sind in der Tabelle 3 angegeben.

*Fertigungsbeispiel 3 (F1VB3)*

Das Sinterpulver (SP) aus dem Vergleichsbeispiel 3 (VB3) wurde mittels einer handelsüblichen Lasersintermaschine (Farsoon, HT251P, China) zu Formkörpern verarbeitet. Die Verarbeitungsparameter beim Lasersintern sind in der Tabelle 3 angegeben.

*Fertigungsbeispiel 4 (F1VB4)*

Das Sinterpulver (SP) aus dem Vergleichsbeispiel 4 (VB4) wurde mittels einer handelsüblichen Lasersintermaschine (Farsoon, HT251P, China) zu Formkörpern verarbeitet. Die Verarbeitungsparameter beim Lasersintern sind in der Tabelle 3 angegeben.

*Fertigungsbeispiel 5 (F1VB5)*

Das Sinterpulver (SP) aus dem Vergleichsbeispiel 5 (VB5) wurde mittels einer handelsüblichen Lasersintermaschine (Farsoon, HT251P, China) zu Formkörpern verarbeitet. Die Verarbeitungsparameter beim Lasersintern sind in der Tabelle 3 angegeben.

*Fertigungsbeispiel 6 (F1VB6)*

Das Sinterpulver (SP) aus dem Vergleichsbeispiel 6 (VB6) wurde mittels einer handelsüblichen Lasersintermaschine (Farsoon, HT251P, China) zu Formkörpern verarbeitet. Die Verarbeitungsparameter beim Lasersintern sind in der Tabelle 3 angegeben.

Tabelle 3

| | Fertigungsbeispiele 1 bis 6 (außer 6) | Fertigungsbeispiel 6 |
|---|---|---|
| Laserenergie (W) | 50 | 40 |
| Bauraumtemperatur (°C) | 108 | 95 |
| Linienabstand Laser (mm) | 0,10 | 0,2 |
| Lasergeschwindigkeit (m/s) | 15 | 4 |
| Pulverschichtstärke (mm) | 0,1 | 0,15 |

*Fertigungsbeispiel 10 (F2B1)*

Das Sinterpulver (SP) aus dem erfindungsgemäßen Beispiel 1 (B1) wurde mittels einer Multi Jet Fusion Maschine (HP, HP Jet Fusion 5210 3D Printer, USA) zu Probekörpern verarbeitet. Als Parametereinstellungen wurde ‚Ultrasint TPU01 - Balanced' verwendet.

*Fertigungsbeispiel 11 (F2VB3)*

Das Sinterpulver (SP) aus dem Vergleichsbeispiel 3 (VB3) wurde mittels einer Multi Jet Fusion Maschine (HP, HP Jet Fusion 5210 3D Printer, USA) zu Probekörpern verarbeitet. Als Parametereinstellungen wurde ‚Ultrasint TPU01 - Balanced' verwendet.

*Fertigungsbeispiel 12 (F2VB5)*

Das Sinterpulver (SP) aus dem Vergleichsbeispiel 5 (VB5) wurde mittels einer Multi Jet Fusion Maschine (HP, HP Jet Fusion 5210 3D Printer, USA) zu Probekörpern verarbeitet. Als Parametereinstellungen wurde ‚Ultrasint TPU01 - Balanced' verwendet.

*Referenz 1 (R1)*

Die Werte aus dem Beispiel 1 aus US 8114334 B2 wurden als Vergleichswerte in der Tabelle 4 eingetragen.
Die Eigenschafften der hergestellten Formkörper werden in den Tabellen 4 und 5 zusammengefasst.

Tabelle 4

|  | F1 B1 | F1 B2 | F1 VB3 | F1 VB4 | F1 VB5 | F1 VB6 | R1 |
|---|---|---|---|---|---|---|---|
| Sinterpulver | **B1** | **B2** | **VB 3** | **VB4** | **VB5** | **VB6** | - |
| Zugfestigkeit (MPa) | 9,1 | 8,5 | 8,1 | 7,2 | 6,8 | 16 | 2.7 |
| Zugdehnung (%) | 360 | 320 | 270 | 220 | 170 | 370 | 170 |
| Prozessfähigkeit* | 9,7 | 9,3 | 6,3 | 3,3 | 3,8 | 1,2 | - |
| Bauteilgüte* | 9,8 | 9,2 | 6,8 | 4,5 | 4,9 | 0,7 | - |
| Bauabbrüche** | 0 | 0 | 1 | 2 | 1 | 7 | - |

Tabelle 5

|  | F2B1 | F2VB3 | F2VB5 |
|---|---|---|---|
| Sinterpulver | **B1** | **VB3** | **VB5** |
| Zugfestigkeit (MPa) | 9,0 | 8,3 | 6,3 |
| Zugdehnung (%) | 310 | 280 | 180 |
| Prozessfähigkeit* | 10 | 5,7 | 4,7 |
| Bauteilgüte* | 9,9 | 6,4 | 6,1 |
| Bauabbrüche** | 0 | 2 | 2 |

* Die *Prozessfähigkeit* wurde von mindestens drei unterschiedlichen Maschinenbedienern während vollständigen 10 Druckvorgängen überwacht. Unter einem vollständigen Druckvorgang wird verstanden, dass das Bauraumlayout vollständig hergestellt werden konnte. Darüber hinaus wurde die *Bauteilgüte* der Formkörper, die während der vorhergenannten Druckvorgänge hergestellt wurden, durch die Maschinenbediener untersucht. Anschließend wurde die Prozessfähigkeit und Bauteilgüte von den Maschinenbedienern jeweils auf einer Skala von 0 bis 10 (10 = am besten; 1 = am schlechtesten) bewertet. Die Werte in den Tabellen 5 beziehungsweise 6 entsprechen dem numerischen Mittelwert von mindestens drei unabhängigen Bewertungen. Die Punktzahl 0 stellt die geringste Bewertung dar. Falls so viele Defekte während dem Bau beobachtet wurden, dass die Punktzahl unter 0 sinken würde, wird der Druckvorgang abgebrochen (siehe *Bauabbruch***).

Dabei wird ein Druckversuch solange wiederholt, bis das Bauraumlayout vollständig hergestellt wurde.

Folgende Defekte führen zu einem Abzug in der Bewertung der Prozessfähigkeit:

- Rieselfähigkeitsprobleme bei der Dosierung/Zuführung der pulverförmigen Formulierung: -2 Punkte
- Probleme (Inhomogenitäten) bei der Auftragung der Pulverschichten wie zum Beispiel:

  • Agglomeratbildung des Pulvers im/auf dem Pulverbett: -1 Punkt
  • Streifen im Pulverbett: -0,5 Punkte (1-3 Streifen), -1 Punkt (4-6 Streifen), -2 Punkte (> 6 Streifen); unter Streifen werden leichte nicht sehr tiefe Furchen verstanden.
  • Starke Löcher oder Furchen im Pulverbett: -1 Punkt (pro Loch oder Furche)
  • Verkantung/Verkeilung des Auftragungswerkzeugs (z.B.: Rakel, Roller): -2 Punkte
  • So genannten Short-Feeds' (bei einem Short-Feed wird zu wenig Pulver als Pulverschicht aufgetragen): -2 Punkte

Folgende Defekte führen zu einem Abzug in der Bewertung der Bauteilgüte:

- Überschmelzen von Teilen aufgrund eines starken lokalen Hitzeaufbaus in den Teilen: -1 Punkte
- Verzug bei gefertigten Bauteilen: -3 Punkte
- Oberflächendefekte: -1 Punkt (pro 3 Defekte)
- Übermäßig raue Oberfläche an den Teilen: -1 Punkt

  ** Bei einem *Bauabbruch* wird der weitere Druckvorgang verhindert, weil zum Beispiel das Pulverauftragssystem (Klinge, Rolle) blockiert wird, Teile (aufgrund eines Verzugs) hochgekommen sind, Teile am Pulverauftragssystem hängen bleiben und/oder die Pulverdosierung blockiert ist/wird.

Ein Bauabbruch hat zur Folge, dass die zum Teil hergestellten Formteile verworfen und erneut gedruckt werden müssen. Dies führt zu einer Erhöhung des Materialverlustes sowie der Verlängerung der Gesamtbauzeit, woraus eine enorme Verschlechterung der Wirtschaftlichkeit resultiert. Deshalb wird die Anzahl der Bauabbrüche, die bei der Durchführung von 10 vollständigen Bauvorgängen (ohne Abbruch) aufgetreten sind, gesondert angeführt. Somit fließt die Anzahl der Bauabbrüche nicht in die Bewertung der Prozessfähigkeit mit ein, da ein Bauabbruch einen eindeutig fehlgeschlagenen Prozess darstellt.

**Patentansprüche**

1. Sinterpulver (SP) enthaltend die Komponenten

   59,5 bis 99,85 Gew.-%, bezogen auf die Summe der Gewichtsprozente (A), (B) (C), (D) und (E), mindestens eines thermoplastischen Polyurethans (A),
   0,05 bis 0,5 Gew.-%, bezogen auf die Summe der Gewichtsprozente (A), (B) (C), (D) und (E), mindestens eines Fließmittels (B),
   0,1 bis 5 Gew.-%, bezogen auf die Summe der Gewichtsprozente (A), (B) (C), (D) und (E), mindestens eines organischen Additivs (C),
   0 bis 5 Gew.-%, bezogen auf die Summe der Gewichtsprozente (A), (B) (C), (D) und (E), mindestens eines weiteren Additivs (D) und
   0 bis 30 Gew.-%, bezogen auf die Summe der Gewichtsprozente (A), (B) (C), (D) und (E), mindestens eines Verstärkungsmittels (E), wobei das mindestens eine organische Additiv (C) ausgewählt ist aus der Gruppe bestehend aus mit Maleinsäure und/oder Maleinsäureanhydrid gegrafteten Polypropylen-Wachsen und Amid-Wachsen.

2. Sinterpulver (SP) gemäß Anspruch 1, **dadurch gekennzeichnet, dass** das mindestens eine Fließmittel (B) ausgewählt ist aus der Gruppe bestehend aus Siliciumdioxid, Silikaten, Kieselsäuren, Metalloxiden, Mineralien, Boraten, Phosphaten, Sulfaten und Carbonaten, vorzugsweise aus hydrophoben pyrogenen Kieselsäuren, Talk, Kaolin, Magnesiumsulfat, Calciumsulfat, Bariumsulfat, Magnesiumcarbonat, Calciumcarbonat und Bariumcarbonat.

3. Sinterpulver (SP) gemäß Anspruch 1 oder 2, **dadurch gekennzeichnet, dass** das Sinterpulver (SP)

   i) 74,15 bis 99,7 Gew.-%, bevorzugt 76,12 bis 99,42 Gew.-%, der Komponente (A), jeweils bezogen auf die Summe der Gewichtsprozente (A), (B), (C), (D) und (E), enthält, und/oder

ii) 0,1 bis 0,35 Gew.-%, bevorzugt 0,18 bis 0,28 Gew.-%, der Komponente (B), jeweils bezogen auf die Summe der Gewichtsprozente (A), (B), (C), (D) und (E), enthält, und/oder

iii) 0,2 bis 3 Gew.-%, bevorzugt 0,4 bis 1,1 Gew.-%, der Komponente (C), jeweils bezogen auf die Summe der Gewichtsprozente (A), (B), (C), (D) und (E), enthält, und/oder

iv) 0 bis 2,5 Gew.-% der Komponente (D), bezogen auf die Summe der Gewichtsprozente (A), (B), (C), (D) und (E), enthält, und/oder

v) 0 bis 20 Gew.-% der Komponente (E), bezogen auf die Summe der Gewichtsprozente der Komponenten (A), (B), (C), (D) und (E).

4. Sinterpulver (SP) gemäß einem der Ansprüche 1 bis 3, **dadurch gekennzeichnet, dass** das mindestens eine organische Additiv (C)

i) ein N,N'-Alkylen-Difettsäureamid ist, und/oder

ii) so ausgewählt ist, dass der Tropfpunkt des mindestens einen organischen Additivs (C) die folgende Bedingung (Formel I) erfüllt

$$(T_{M(A)} - 25°C) \leq D_P < (T_{M(A)} + 25°C) \qquad (I),$$

wobei $D_P$ der Tropfpunkt des mindestens einen organischen Additivs (C) und $T_{M(A)}$ die Schmelztemperatur des mindestens einen thermoplastischen Polyurethans (A) ist, und/oder

iii) so ausgewählt ist, dass die gesamte Grenzflächenenergie $\gamma_S$ des Sinterpulvers (SP) $\leq 25$ mN·m$^{-1}$, bevorzugt $\leq 15$ mN·m$^{-1}$, mehr bevorzugt $\leq 10$ mN·m$^{-1}$, ist, und/oder

iv) so ausgewählt ist, dass der disperse Anteil der Grenzflächenenergie $\gamma_S^D$ des Sinterpulvers (SP) $\leq 20$ mN·m$^{-1}$, bevorzugt $\leq 11$ mN·m$^{-1}$, mehr bevorzugt $\leq 7$ mN·m$^{-1}$, ist, und/oder

v) so ausgewählt ist, dass der polare Anteil der Grenzflächenenergie $\gamma_S^P$ des Sinterpulvers (SP) $\leq 5$ mN·m$^{-1}$, bevorzugt $\leq 4$ mN·m$^{-1}$, mehr bevorzugt $\leq 3$ mN·m$^{-1}$, ist.

5. Sinterpulver (SP) gemäß einem der Ansprüche 1 bis 4, **dadurch gekennzeichnet, dass** das Sinterpulver (SP)

i) eine mittlere Partikelgröße (D50-Wert) im Bereich von 10 bis 190 $\mu$m, bevorzugt im Bereich von 15 bis 150 $\mu$m, mehr bevorzugt im Bereich von 20 bis 110 $\mu$m, besonders bevorzugt im Bereich von 40 bis 100 $\mu$m, aufweist, und/oder

ii) eine Schmelztemperatur ($T_{M(SP)}$) im Bereich von 80 bis 220°C, bevorzugt im Bereich von 100 bis 190 °C, mehr bevorzugt im Bereich von 120 bis 170 °C aufweist, und/oder

iii) eine Schmelzvolumenrate (MVR) im Bereich von 3 bis 150 cm$^3$/10min, bevorzugt im Bereich von 15 bis 100 cm$^3$/10min, mehr bevorzugt im Bereich von 30 bis 70 cm$^3$/10min, aufweist, und/oder

iv) eine Schüttdichte von $\geq 300$ g/L, bevorzugt von $\geq 350$ g/L und mehr bevorzugt von $\geq 400$ g/L aufweist.

6. Sinterpulver (SP) gemäß einem der Ansprüche 1 bis 5, **dadurch gekennzeichnet, dass** das mindestens eine Fließmittel (B) einen D90-Wert $\leq 10$ $\mu$m, bevorzugt $\leq 2$ $\mu$m, aufweist.

7. Sinterpulver (SP) gemäß einem der Ansprüche 1 bis 6, **dadurch gekennzeichnet, dass** das mindestens eine weitere Additiv (D) ausgewählt ist aus der Gruppe bestehend aus Antinukleierungsmitteln, Stabilisatoren, leitfähigen Additiven, Endgruppenfunktionalisierern, Farbstoffen, Antioxidationsmitteln, Flammschutzmitteln und Farbpigmenten.

8. Sinterpulver (SP) gemäß einem der Ansprüche 1 bis 7, **dadurch gekennzeichnet, dass** das mindestens eine Verstärkungsmittel (E) ausgewählt ist aus der Gruppe bestehend aus Carbonnanotubes, Glaskugeln und Aluminiumsilikaten, vorzugsweise aus der Gruppe bestehend aus Glaskugeln und Aluminiumsilikaten.

9. Verfahren zur Herstellung eines Sinterpulvers (SP) enthaltend

59,5 bis 99,85 Gew.-%, bezogen auf das Gesamtgewicht des Sinterpulvers (SP), mindestens eines thermoplastischen Polyurethans (A),

0,05 bis 0,5 Gew.-%, bezogen auf das Gesamtgewicht des Sinterpulvers (SP), mindestens eines Fließmittels (B),

0,1 bis 5 Gew.-%, bezogen auf das Gesamtgewicht des Sinterpulvers (SP), mindestens eines organischen Additivs (C),

0 bis 5 Gew.-%, bezogen auf das Gesamtgewicht des Sinterpulvers (SP), mindestens eines weiteren Additivs (D) und

0 bis 30 Gew.-%, bezogen auf das Gesamtgewicht des Sinterpulvers (SP), mindestens eines Verstärkungsmittels (E),

umfassend den Schritt

a) Mahlen der Gesamtmenge, bezogen auf das Gesamtgewicht des Sinterpulvers (SP), der Komponente (A),

wobei ein erster Teil (BT1) der Gesamtmenge, bezogen auf das Gesamtgewicht des Sinterpulvers (SP), der Komponente (B) und/oder ein erster Teil (CT1) der Gesamtmenge, bezogen auf das Gesamtgewicht des Sinterpulvers (SP), der Komponente (C) vor Schritt a) der Komponente (A) unter Erhalt eines Pulvers (P) zugemischt werden und dem Pulver (P) nach Schritt a) der restliche Teil (BT2) der Gesamtmenge der Komponente (B) und/oder der restliche Teil (CT2) der Gesamtmenge der Komponente (C) unter Erhalt des Sinterpulvers (SP) zugemischt werden, wobei der erste Teil (BT1) 0 bis 100 Gew.-% der Gesamtmenge, bezogen auf das Gesamtgewicht des Sinterpulvers (SP), der Komponente (B) ausmacht und wobei der erste Teil (CT1) 0 bis 100 Gew.-% der Gesamtmenge, bezogen auf das Gesamtgewicht des Sinterpulvers (SP), der Komponente (C) ausmacht, und wobei der restliche Teil (BT2) (100-BT1) Gew.-% der Gesamtmenge, bezogen auf das Gesamtgewicht des Sinterpulvers (SP), der Komponente (B) und der restliche Teil (CT2) (100-CT1) Gew.-% der Gesamtmenge, bezogen auf das Gesamtgewicht des Sinterpulvers (SP), der Komponente (C) ausmacht, und wobei gegebenenfalls

die Gesamtmenge, bezogen auf das Gesamtgewicht des Sinterpulvers (SP), der Komponente (D) und/oder die Gesamtmenge, bezogen auf das Gesamtgewicht des Sinterpulvers (SP), der Komponente (E) vor Schritt a) oder nach Schritt a) zugemischt werden,

wobei das mindestens eine organische Additiv (C) ausgewählt ist aus der Gruppe bestehend aus mit Maleinsäure und/oder Maleinsäureanhydrid gegrafteten Polypropylen-Wachsen und Amid-Wachsen.

10. Verfahren zur Herstellung eines Formkörpers umfassend die Schritte:

i) Bereitstellen einer Schicht eines Sinterpulvers (SP) gemäß einem der Ansprüche 1 bis 8, und

ii) Belichten oder Erwärmen der in Schritt i) bereitgestellten Schicht des Sinterpulvers (SP).

11. Formkörper erhältlich durch ein Verfahren gemäß Anspruch 10.

12. Verwendung mindestens eines Fließmittels (B) und mindestens eines organischen Additivs (C) in einem Sinterpulver (SP), das mindestens ein thermoplastisches Polyurethan (A) enthält, zur Verbesserung der Rieselfähigkeit und Koaleszenz des Sinterpulvers (SP), wobei das mindestens eine organische Additiv (C) ausgewählt ist aus der Gruppe bestehend aus mit Maleinsäure und/oder Maleinsäureanhydrid gegrafteten Polypropylen-Wachsen und Amid-Wachsen.

13. Verwendung eines Sinterpulvers (SP) gemäß einem der Ansprüche 1 bis 8 in einem Sinterverfahren, vorzugsweise in einem selektiven Lasersinterverfahren (SLS) oder in einem Multi-Jet-Fusion-Verfahren (MJF).

14. Formkörper erhältlich über ein Sinterverfahren unter Verwendung eines Sinterpulvers (SP) gemäß einem der Ansprüche 1 bis 8.

**Claims**

1. A sinter powder (SP) comprising the following components:

59.5% to 99.85% by weight, based on the sum total of the percentages by weight of (A), (B), (C), (D) and (E), of at least one thermoplastic polyurethane (A),

0.05% to 0.5% by weight, based on the sum total of the percentages by weight of (A), (B), (C), (D) and (E), of at least one flow agent (B),

0.1% to 5% by weight, based on the sum total of the percentages by weight of (A), (B), (C), (D) and (E), of at least one organic additive (C),

0% to 5% by weight, based on the sum total of the percentages by weight of (A), (B), (C), (D) and (E), of at least one further additive (D) and

0% to 30% by weight, based on the sum total of the percentages by weight of (A), (B), (C), (D) and (E), of at least one reinforcer (E), wherein the at least one organic additive (C) is selected from the group consisting of maleic acid- and/or maleic anhydride-grafted polypropylene waxes and amide waxes.

2. The sinter powder (SP) according to claim 1, wherein the at least one flow agent (B) is selected from the group consisting of silicon dioxide, silicates, silicas, metal oxides, minerals, borates, phosphates, sulfates and carbonates, preferably from hydrophobic fumed silicas, talc, kaolin, magnesium sulfate, calcium sulfate, barium sulfate, magnesium carbonate, calcium carbonate and barium carbonate.

3. The sinter powder (SP) according to claim 1 or 2, wherein the sinter powder (SP) comprises

   i) 74.15% to 99.7% by weight, preferably 76.12% to 99.42% by weight, of component (A), based in each case on the sum total of the percentages by weight of (A), (B), (C), (D) and (E), and/or
   ii) 0.1% to 0.35% by weight, preferably 0.18% to 0.28% by weight, of component (B), based in each case on the sum total of the percentages by weight of (A), (B), (C), (D) and (E), and/or
   iii) 0.2% to 3% by weight, preferably 0.4% to 1.1% by weight, of component (C), based in each case on the sum total of the percentages by weight of (A), (B), (C), (D) and (E), and/or
   iv) 0% to 2.5% by weight of component (D), based on the sum total of the percentages by weight of (A), (B), (C), (D) and (E), and/or
   v) 0% to 20% by weight of component (E), based on the sum total of the percentages by weight of components (A), (B), (C), (D) and (E).

4. The sinter powder (SP) according to any of claims 1 to 3, wherein the at least one organic additive (C)

   i) is an N,N'-alkylene fatty acid diamide, and/or
   ii) is selected in such a way that the dropping point of the at least one organic additive (C) satisfies the following condition (formula I):

$$(T_{M(A)} - 25°C) \leq D_P < (T_{M(A)} + 25°C) \qquad (I),$$

   where $D_P$ is the dropping point of the at least one organic additive (C) and $T_{M(A)}$ is the melting temperature of the at least one thermoplastic polyurethane (A), and/or
   iii) is selected such that the total interfacial energy $\gamma_S$ of the sinter powder (SP) is $\leq 25$ mN·m$^{-1}$, preferably $\leq 15$ mN·m$^{-1}$, more preferably $\leq 10$ mN·m$^{-1}$, and/or
   iv) is selected such that the disperse component of the interfacial energy $\gamma_S^D$ of the sinter powder (SP) is $\leq 20$ mN·m$^{-1}$, preferably $\leq 11$ mN·m$^{-1}$, more preferably $\leq 7$ mN·m$^{-1}$, and/or
   v) is selected such that the polar component of the interfacial energy $\gamma_S^p$ of the sinter powder (SP) is $\leq 5$ mN·m$^{-1}$, preferably $\leq 4$ mN·m$^{-1}$, more preferably $\leq 3$ mN·m$^{-1}$.

5. The sinter powder (SP) according to any of claims 1 to 4, wherein the sinter powder (SP) has

   i) a median particle size (D50) in the range from 10 to 190 pm, preferably in the range from 15 to 150 pm, more preferably in the range from 20 to 110 pm, especially preferably in the range from 40 to 100 pm, and/or
   ii) a melting temperature ($T_{M(SP)}$) in the range from 80 to 220°C, preferably in the range from 100 to 190°C, more preferably in the range from 120 to 170°C, and/or
   iii) a melt volume flow rate (MVR) in the range from 3 to 150 cm$^3$/10min, preferably in the range from 15 to 100 cm$^3$/10min, more preferably in the range from 30 to 70 cm$^3$/10min, and/or
   iv) a bulk density of $\geq 300$ g/L, preferably of $\geq 350$ g/L and more preferably of $\geq 400$ g/L.

6. The sinter powder (SP) according to any of claims 1 to 5, wherein the at least one flow agent (B) has a D90 of $\leq 10$ pm, preferably $\leq 2$ pm.

7. The sinter powder (SP) according to any of claims 1 to 6, wherein the at least one further additive (D) is selected from the group consisting of antinucleating agents, stabilizers, conductive additives, end group functionalizers, dyes, antioxidants, flame retardants and color pigments.

8. The sinter powder (SP) according to any of claims 1 to 7, wherein the at least one reinforcer (E) is selected from the group consisting of carbon nanotubes, glass beads and aluminum silicates, preferably from the group consisting of glass beads and aluminum silicates.

9. A method of producing a sinter powder (SP) comprising

59.5% to 99.85% by weight, based on the total weight of the sinter powder (SP), of at least one thermoplastic polyurethane (A),
0.05% to 0.5% by weight, based on the total weight of the sinter powder (SP), of at least one flow agent (B),
0.1% to 5% by weight, based on the total weight of the sinter powder (SP), of at least one organic additive (C),
0% to 5% by weight, based on the total weight of the sinter powder (SP), of at least one further additive (D) and
0% to 30% by weight, based on the total weight of the sinter powder (SP), of at least one reinforcer (E),
comprising the step of

a) grinding the total amount, based on the total weight of the sinter powder (SP), of component (A),

wherein a first portion (BT1) of the total amount, based on the total weight of the sinter powder (SP), of component (B) and/or a first portion (CT1) of the total amount, based on the total weight of the sinter powder (SP), of component (C) are mixed into component (A) prior to step a) to obtain a powder (P), and the remaining portion (BT2) of the total amount of component (B) and/or the remaining portion (CT2) of the total amount of component (C) are mixed into the powder (P) after step a) to obtain the sinter powder (SP), wherein the first portion (BT1) accounts for 0% to 100% by weight of the total amount, based on the total weight of the sinter powder (SP), of component (B) and wherein the first portion (CT1) accounts for 0% to 100% by weight of the total amount, based on the total weight of the sinter powder (SP), of component (C), and wherein the remaining portion (BT2) accounts for (100 - BT1)% by weight of the total amount, based on the total weight of the sinter powder (SP), of component (B) and the remaining portion (CT2) accounts for (100 - CT1)% by weight of the total amount, based on the total weight of the sinter powder (SP), of component (C), and wherein optionally the total amount, based on the total weight of the sinter powder (SP), of component (D) and/or the total amount, based on the total weight of the sinter powder (SP), of component (E) is mixed in before step a) or after step a), wherein the at least one organic additive (C) is selected from the group consisting of maleic acid- and/or maleic anhydride-grafted polypropylene waxes and amide waxes.

10. A method of producing a shaped body, comprising the steps of:

i) providing a layer of a sinter powder (SP) according to any of claims 1 to 8, and
ii) exposing or heating the layer of the sinter powder (SP) provided in step i).

11. A shaped body obtainable by a method according to claim 10.

12. The use of at least one flow agent (B) and at least one organic additive (C) in a sinter powder (SP) comprising at least one thermoplastic polyurethane (A) for improving the flowability and coalescence of the sinter powder (SP), wherein the at least one organic additive (C) is selected from the group consisting of maleic acid- and/or maleic anhydride-grafted polypropylene waxes and amide waxes.

13. The use of a sinter powder (SP) according to any of claims 1 to 8 in a sintering method, preferably in a selective laser sintering (SLS) method or in a multi-jet fusion (MJF) method.

14. A shaped body obtainable via a sintering method using a sinter powder (SP) according to any of claims 1 to 8.

**Revendications**

1. Poudre de frittage (SP) contenant les composants

   59,5 à 99,85 % en poids, par rapport à la somme des pourcentages en poids de (A), (B), (C), (D) et (E), d'au moins un polyuréthane thermoplastique (A),
   0,05 à 0,5 % en poids, par rapport à la somme des pourcentages en poids de (A), (B), (C), (D) et (E), d'au moins un agent d'écoulement (B),
   0,1 à 5 % en poids, par rapport à la somme des pourcentages en poids de (A), (B), (C), (D) et (E), d'au moins un additif organique (C),
   0 à 5 % en poids, par rapport à la somme des pourcentages en poids de (A), (B), (C), (D) et (E), d'au moins un autre additif (D) et
   0 à 30 % en poids, par rapport à la somme des pourcentages en poids de (A), (B), (C), (D) et (E), d'au moins un agent de renforcement (E), l'au moins un additif organique (C) étant choisi dans le groupe consistant en les cires d'amides et les cires de polypropylène greffé par de l'acide maléique et/ou de l'anhydride maléique.

2. Poudre de frittage (SP) selon la revendication 1, **caractérisée en ce que** l'au moins un agent d'écoulement (B) est choisi dans le groupe consistant en le dioxyde de silicium, les silicates, les silices, les oxydes métalliques, les produits minéraux, les borates, les phosphates, les sulfates et les carbonates, de préférence parmi les silices pyrogènes hydrophobes, le talc, le kaolin, le sulfate de magnésium, le sulfate de calcium, le sulfate de baryum, le carbonate de magnésium, le carbonate de calcium et le carbonate de baryum.

3. Poudre de frittage (SP) selon la revendication 1 ou 2, **caractérisée en ce que** la poudre de frittage (SP)

   i) contient 74,15 à 99,7 % en poids, de préférence 76,12 à 99,42 % en poids du composant (A), dans chaque cas par rapport à la somme des pourcentages en poids de (A), (B), (C), (D) et (E), et/ou
   ii) contient 0,1 à 0,35 % en poids, de préférence 0,18 à 0,28 % en poids du composant (B), dans chaque cas par rapport à la somme des pourcentages en poids de (A), (B), (C), (D) et (E), et/ou
   iii) 0,2 à 3 % en poids, de préférence 0,4 à 1,1 % en poids du composant (C), dans chaque cas par rapport à la somme des pourcentages en poids de (A), (B), (C), (D) et (E), et/ou
   iv) 0 à 2,5 % en poids du composant (D), par rapport à la somme des pourcentages en poids de (A), (B), (C), (D) et (E), et/ou
   v) 0 à 20 % en poids du composant (E), par rapport à la somme des pourcentages en poids des composants (A), (B), (C), (D) et (E).

4. Poudre de frittage (SP) selon l'une des revendications 1 à 3, **caractérisée en ce que** l'au moins un additif organique (C)

   i) est un N,N'-alkylène-di(amide d'acide gras), et/ou
   ii) est choisi de façon que le point de goutte de l'au moins un additif organique (C) satisfasse à la condition suivante (Formule I)

   $$(T_{M(A)} - 25\ °C) \leq D_P < (T_{M(A)} + 25\ °C) \qquad (I),$$

   dans laquelle $D_P$ est le point de goutte de l'au moins un additif organique (C) et $T_{M(A)}$ est la température de fusion de l'au moins un polyuréthane thermoplastique (A), et/ou
   iii) est choisi de façon que l'énergie interfaciale totale $\gamma_S$ de la poudre de frittage (SP) soit $\leq$ 25 mN·m⁻¹, de préférence $\leq$ 15 mN·m⁻¹, plus préférentiellement $\leq$ 10 mN·m⁻¹, et/ou
   iv) est choisi de façon que la partie dispersée de l'énergie interfaciale $\gamma_S^D$ de la poudre de frittage (SP) soit $\leq$ 20 mN·m⁻¹, de préférence $\leq$ 11 mN·m⁻¹, plus préférentiellement $\leq$ 7 mN·m⁻¹, et/ou
   v) est choisi de façon que la partie polaire de l'énergie interfaciale $\gamma_S^P$ de la poudre de frittage (SP) soit $\leq$ 5 mN·m⁻¹, de préférence $\leq$ 4 mN·m⁻¹, plus préférentiellement $\leq$ 3 mN·m⁻¹.

5. Poudre de frittage (SP) selon l'une des revendications 1 à 4, **caractérisée en ce que** la poudre de frittage (SP)

i) présente une granulométrie moyenne (D50) dans la plage de 10 à 190 pm, de préférence dans la plage de 15 à 150 pm, plus préférentiellement dans la plage de 20 à 110 pm, tout spécialement dans la plage de 40 à 100 pm, et/ou

ii) présente une température de fusion ($T_{M(SP)}$) dans la plage de 80 à 220 °C, de préférence dans la plage de 100 à 190 °C, plus préférentiellement dans la plage de 120 à 170 °C, et/ou

iii) présente un indice de fluidité de fusion (MVR) dans la plage de 3 à 150 cm$^3$/10 min, de préférence dans la plage de 15 à 100 cm$^3$/10 min, plus préférentiellement dans la plage de 30 à 70 cm$^3$/10 min, et/ou

iv) présente une masse volumique apparente ≥ 300 g/l, de préférence ≥ 350 g/l et plus préférentiellement ≥ 400 g/l.

6. Poudre de frittage (SP) selon l'une des revendications 1 à 5, **caractérisée en ce que** l'au moins un agent d'écoulement (B) présente une D90 ≤ 10 pm, de préférence ≤ 2 pm.

7. Poudre de frittage (SP) selon l'une des revendications 1 à 6, **caractérisée en ce que** l'au moins un autre additif (D) est choisi dans le groupe consistant en les agents anti-nucléation, les stabilisants, les additifs conducteurs, les agents de fonctionnalisation des groupes terminaux, les colorants, les agents anti-oxydation, les agents d'ignifugation et les pigments colorés.

8. Poudre de frittage (SP) selon l'une des revendications 1 à 7, **caractérisée en ce que** l'au moins un agent de renforcement (E) est choisi dans le groupe consistant en les nanotubes de carbone, les billes de verre et les silicates d'aluminium, de préférence dans le groupe consistant en les billes de verre et les silicates d'aluminium.

9. Procédé de fabrication d'une poudre de frittage (SP) contenant

59,5 à 99,85 % en poids, par rapport au poids total de la poudre de frittage (SP), d'au moins un polyuréthane thermoplastique (A),

0,05 à 0,5 % en poids, par rapport au poids total de la poudre de frittage (SP), d'au moins un agent d'écoulement (B),

0,1 à 5 % en poids, par rapport au poids total de la poudre de frittage (SP), d'au moins un additif organique (C),

0 à 5 % en poids, par rapport au poids total de la poudre de frittage (SP), d'au moins un autre additif (D), et

0 à 30 % en poids, par rapport au poids total de la poudre de frittage (SP), d'au moins un agent de renforcement (E),

comprenant l'étape

a) broyage de la quantité totale, rapportée au poids total de la poudre de frittage (SP), du composant (A),

dans lequel une première partie (BT1) de la quantité totale, par rapport au poids total de la poudre de frittage (SP), du composant (B) et/ou une première partie (CT1) de la quantité totale, par rapport au poids total de la poudre de frittage (SP), du composant (C), sont mélangées avant l'étape a) au composant (A) avec obtention d'une poudre (P), et on mélange à la poudre (P) après l'étape a) la partie restante (BT2) de la quantité totale du composant (B) et/ou la partie restante (CT2) de la quantité totale du composant (C) avec obtention de la poudre de frittage (SP), dans lequel la première partie (BT1) représente 0 à 100 % en poids de la quantité totale, par rapport au poids total de la poudre de frittage (SP), du composant (B), et dans lequel la première partie (CT1) représente 0 à 100 % en poids de la quantité totale, par rapport au poids total de la poudre de frittage (SP), du composant (C), et dans lequel la partie restante (BT2) représente (100-BT1) % en poids de la quantité totale, par rapport au poids total de la poudre de frittage (SP), du composant (B), et la partie restante (CT2) représente (100-CT1) % en poids de la quantité totale, par rapport au poids total de la poudre de frittage (SP), du composant (C),

et dans lequel, éventuellement

la quantité totale, par rapport au poids total de la poudre de frittage (SP), du composant (D) et/ou

la quantité totale, par rapport au poids total de la poudre de frittage (SP), du composant (E), sont mélangées avant l'étape a) ou après l'étape a),

dans lequel l'au moins un additif organique (C) est choisi dans le groupe consistant en les cires d'amides et les cires de polypropylène greffé par de l'acide maléique et/ou de l'anhydride maléique.

10. Procédé de fabrication d'un objet façonné, comprenant les étapes :

i) fourniture d'une couche d'une poudre de frittage (SP) selon l'une des revendications 1 à 8, et

ii) exposition à la lumière ou chauffage de la couche, fournie dans l'étape i), de la poudre de frittage (SP) .

**11.** Objet façonné pouvant être obtenu par un procédé selon la revendication 10.

**12.** Utilisation d'au moins un agent d'écoulement (B) et d'au moins un additif organique (C) dans une poudre de frittage (SP), qui contient au moins un polyuréthane thermoplastique (A), pour améliorer l'aptitude à l'écoulement libre et la coalescence de la poudre de frittage (SP), l'au moins un additif organique (C) étant choisi dans le groupe consistant en les cires d'amides et les cires de polypropylène greffé par de l'acide maléique et/ou de l'anhydride maléique.

**13.** Utilisation d'une poudre de frittage (SP) selon l'une des revendications 1 à 8 dans un procédé de frittage, de préférence dans un procédé de frittage laser sélectif (SLS) ou dans un procédé multi-jet-fusion (MJF).

**14.** Objet façonné pouvant être obtenu par un procédé de frittage par utilisation d'une poudre de frittage (SP) selon l'une des revendications 1 à 8.

## Figur 1

## Figur 2

# Figur 3

# Figur 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6136948 A
- WO 9606881 A
- EP 1648686 A
- US 6110411 A
- US 20040204531 A
- EP 3157737 B1
- DE 102017124047 A1
- US 8114334 B2

**In der Beschreibung aufgeführte Nicht-Patentliteratur**

- **VON S. ZIEGELMEIER et al.** An experimental study into the effects of bulk and flow behaviour of laser sintering polymer powders on resulting part properties. *Journal of Materials Processing Technology,* 2015, vol. 215, 239
- **VON R.D. GOODRIDGE et al.** Laser sintering of polyamides and other polymers. *Progress in Materials Science,* 2012, vol. 57, 229
- Plastics Additives Handbook. Hanser Publishers, 2001, vol. 1, 98-S136
- **OWENS, D.K ; WENDT, R.C.** *Jour. of Applied Polymer Science,* 1969, vol. 13, 1741